(19) Europäisches Patentamt / European Patent Office / Office européen des brevets

(11) **EP 4 063 817 B1**

(12) **EUROPÄISCHE PATENTSCHRIFT**

(45) Veröffentlichungstag und Bekanntmachung des Hinweises auf die Patenterteilung:
**03.06.2026   Patentblatt 2026/23**

(21) Anmeldenummer: **22164018.8**

(22) Anmeldetag: **24.03.2022**

(51) Internationale Patentklassifikation (IPC):
**G01K 17/10** (2006.01)     **G01K 17/20** (2006.01)

(52) Gemeinsame Patentklassifikation (CPC):
**G01K 17/10; G01K 17/20;** F24H 15/104

(54) **VERFAHREN ZUM BETRIEB EINER HEIZKOSTENVERTEILERVORRICHTUNG UND HEIZKOSTENVERTEILERVORRICHTUNG**

HEATING COST DISTRIBUTION DEVICE AND METHOD OF OPERATING A HEATING COST DISTRIBUTION DEVICE

PROCÉDÉ DE FONCTIONNEMENT D'UN DISPOSITIF DE RÉPARTITION DES FRAIS DE CHAUFFAGE ET DISPOSITIF DE RÉPARTITION DES FRAIS DE CHAUFFAGE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **26.03.2021   DE 102021203000**

(43) Veröffentlichungstag der Anmeldung:
**28.09.2022   Patentblatt 2022/39**

(73) Patentinhaber: **QUNDIS GmbH
99098 Erfurt (DE)**

(72) Erfinder: **KUHN, Jens
98693 Ilmenau (DE)**

(74) Vertreter: **Liedtke & Partner Patentanwälte
Gerhart-Hauptmann-Straße 10/11
99096 Erfurt (DE)**

(56) Entgegenhaltungen:
**EP-A1- 3 376 122          DE-A1- 102018 103 144
DE-U1- 202016 101 631**

**Beschreibung**

Die Erfindung betrifft ein Verfahren zum Betrieb einer Heizkostenverteilervorrichtung und eine Heizkostenverteilervorrichtung.

Aus der DE 10 2016 104 225 A1 sind ein Heizkostenverteiler und ein Verfahren zur Erfassung der durch einen Heizkörper abgegebenen Wärmemenge bekannt. Die Erfassung der durch einen Heizkörper abgegebenen Wärmemenge erfolgt auf Grundlage einer gemessenen Vorlauftemperatur und einer gemessenen Heizkörpertemperatur des Wärmeträgermediums am Heizkörper. Es wird der Ventilhub eines Heizkörperregelventils ermittelt und die abgegebene Wärmemenge wird aus den Größen Ventilhubstellung, Vorlauftemperatur sowie Heizkörpertemperatur unter Verwendung einer gegebenenfalls voreinstellbaren Betriebskennlinie des Heizkörperregelventils und eines im Arbeitspunkt bekannten Differenzdrucks des Wärmeträgermediums über das Heizkörperregelventil berechnet, wobei die gegebenenfalls voreinstellbare Betriebskennlinie den Zusammenhang zwischen der Hubstellung und dem Volumenstrom bei dem bekannten Differenzdruck herstellt.

In der DE 10 2018 103 144 A1 wird ein Heizkostenverteiler zur Erfassung der durch einen Heizkörper abgegebenen Wärmemenge beschrieben. Der Heizkostenverteiler umfasst einen Vorlauftemperatursensor, einen Raumlufttemperatursensor, ein Heizkörperregelventil, eine Einrichtung zur Ermittlung einer Ventilhubstellung des Heizkörperregelventils und eine Recheneinheit. Das Heizkörperregelventil weist ein dynamisches Ventilunterteil auf, das die Druckdifferenz über dem Heizkörperregelventil konstant hält. Die Recheneinheit ist dazu eingerichtet, aus der ermittelten Ventilhubstellung sowie den gemessenen Größen Vorlauftemperatur und Raumlufttemperatur die abgegebene Wärmemenge zu berechnen.

Der Erfindung liegt die Aufgabe zu Grunde, ein gegenüber dem Stand der Technik verbessertes Verfahren zum Betrieb einer Heizkostenverteilervorrichtung und eine gegenüber dem Stand der Technik verbesserte Heizkostenverteilervorrichtung anzugeben.

Die Aufgabe wird erfindungsgemäß gelöst durch ein Verfahren zum Betrieb einer Heizkostenverteilervorrichtung mit den Merkmalen des Anspruchs 1 und eine Heizkostenverteilervorrichtung mit den Merkmalen des Anspruchs 6.

Vorteilhafte Ausgestaltungen der Erfindung sind Gegenstand der Unteransprüche.

In einem erfindungsgemäßen Verfahren zum Betrieb einer Heizkostenverteilervorrichtung werden ein Volumenstrom m und eine Vorlauftemperatur Tv, und eine Rücklauftemperatur $T_R$ eines den Heizkörper durchströmenden Wärmeträgermediums sowie eine Raumtemperatur $T_L$, d. h. eine Raumlufttemperatur einer Raumluft eines Raums, in dem der Heizkörper angeordnet ist, ermittelt. Diese Parameter bilden eine erste Parametergruppe, d. h. sie sind deren Bestandteil.

Der Volumenstrom m wird beispielsweise mittels eines Volumenstromsensors der Heizkostenverteilervorrichtung ermittelt, insbesondere gemessen. Alternativ oder zusätzlich kann die Heizkostenverteilervorrichtung, insbesondere eine Vorlaufbaugruppe der Heizkostenverteilervorrichtung, beispielsweise ein Heizkörperventil mit, insbesondere einstellbarem, konstantem Volumenstrom m aufweisen. Dieser konstante Volumenstrom m ist dann bekannt, beispielsweise aufgrund einer Voreinstellung des konstanten Volumenstroms m bei Installation des Heizkörperventils am Heizkörper. Für das hier beschriebene Verfahren wird dann dieser bekannte konstante Volumenstrom m verwendet, wobei der konstante Volumenstrom m, d. h. dessen aktuelles Vorliegen, dann weiterhin ermittelt wird, beispielsweise anhand der Vorlauftemperatur oder anhand eines Öffnungssensors am Heizkörperventil.

Die Vorlauftemperatur $T_V$ des den Heizkörper durchströmenden Wärmeträgermediums wird insbesondere mittels eines Vorlauftemperatursensors der Heizkostenverteilervorrichtung ermittelt, insbesondere gemessen.

Die Rücklauftemperatur $T_R$ des den Heizkörper durchströmenden Wärmeträgermediums wird erfindungsgemäß mittels eines Rücklauftemperatursensors der Heizkostenverteilervorrichtung ermittelt, insbesondere gemessen.

Die Raumtemperatur $T_L$, d. h. die Raumlufttemperatur der Raumluft des Raums, in dem der Heizkörper angeordnet ist, wird insbesondere mittels eines Raumtemperatursensors der Heizkostenverteilervorrichtung ermittelt, insbesondere gemessen.

Aus jeweils mindestens einem Parameter der oben genannten Parameter, d. h. aus jeweils mindestens einem der Parameter der oben genannten ersten Parametergruppe, oder jeweils aus mehreren oder allen Parametern der oben genannten ersten Parametergruppe, werden

- eine Oberflächentemperatur To des Heizkörpers in einer vorgegebenen relativen Höhe h% am Heizkörper,
- eine logarithmische Übertemperatur $\Delta T_{ln}$ des Heizkörpers,
- ein Heizkörperexponent n des Heizkörpers,
- eine Referenzleistung $Q_R$ des Heizkörpers, und
- mindestens ein mit einer durch den Heizkörper abgegebenen Wärmemenge korrespondierender Verbrauchswert Q1, Q2, Q3 abgeleitet. Diese jeweils von mindestens einem der Parameter der ersten Parametergruppe abgeleiteten Parameter bilden eine zweite Parametergruppe.

Somit werden die Parameter der ersten Parametergruppe jeweils ermittelt, insbesondere gemessen, wobei für den Parameter Volumenstrom m, wie oben beschrieben, beispielsweise vorgesehen sein kann, dass auch dieser Parameter gemessen wird, insbesondere mittels des Volumenstromsensors, oder dass, insbesondere bei Verwendung des Heizkörperventils mit, insbesondere einstellbarem, konstantem Volumenstrom m dieser dann bekannte konstante Volumenstrom m verwendet wird, wobei dann der konstante Volumenstrom m, d. h. dessen aktuelles Vorliegen, ermittelt wird.

Die Parameter der zweiten Parametergruppe werden, wie beschrieben, jeweils aus mindestens einem der Parameter der ersten Parametergruppe abgeleitet. Sie werden jeweils insbesondere berechnet, insbesondere mittels jeweils mindestens eines Parameters der ersten Parametergruppe.

Die vorgegebene relative Höhe h% bezeichnet einen relativen Höhenwert am jeweiligen Heizkörper in Abhängigkeit und Relation zu dessen jeweiliger Gesamthöhe. Die vorgegebene relative Höhe h% am Heizkörper ist insbesondere eine Höhenposition am jeweiligen Heizkörper, in welcher die Oberflächentemperatur To als eine gute Näherung der mittleren Oberflächentemperatur des Heizkörpers gemessen werden kann. Daher werden herkömmliche, bisher bekannte, Heizkostenverteiler, insbesondere gemäß Vorgabe der EN 834:2013 + AC:2015 (D) in dieser vorgegebenen relativen Höhe h% am Heizkörper montiert. Die vorgegebene relativen Höhe h% am jeweiligen Heizkörper wird durch die Montagevorschrift des Herstellers des Heizkostenverteilers vorgegeben. Beispielsweise beträgt die vorgegebene relative Höhe 50% oder 75% der Gesamthöhe des jeweiligen Heizkörpers.

Eine erfindungsgemäße Heizkostenverteilervorrichtung, betrieben mittels dieses Verfahrens, umfasst eine an einer Vorlaufleitung eines Heizkörpers anordbare oder angeordnete Vorlaufbaugruppe mit einem Vorlauftemperatursensor und insbesondere mit einer Kommunikationseinrichtung, eine an einer Rücklaufleitung des Heizkörpers anordbare oder angeordnete Rücklaufbaugruppe mit einem Rücklauftemperatursensor und insbesondere mit einer Kommunikationseinrichtung, mindestens einen Raumtemperatursensor und mindestens ein Rechenwerk. Die Heizkostenverteilervorrichtung umfasst zudem mindestens einen in der Vorlaufbaugruppe oder Rücklaufbaugruppe angeordneten Volumenstromsensor oder, alternativ oder zusätzlich, ein Heizkörperventil mit, insbesondere einstellbarem, kontantem Volumenstrom m, zweckmäßigerweise in der Vorlaufbaugruppe angeordnet. Der Volumenstromsensor ist insbesondere ausgebildet und eingerichtet zur Ermittlung, insbesondere Messung, des Volumenstroms m.

Der Vorlauftemperatursensor ist insbesondere ausgebildet und eingerichtet zur Ermittlung, insbesondere Messung, der Vorlauftemperatur Tv.

Der Rücklauftemperatursensor ist insbesondere ausgebildet und eingerichtet zur Ermittlung, insbesondere Messung, der Rücklauftemperatur $T_R$.

Der Raumtemperatursensor ist insbesondere ausgebildet und eingerichtet zur Ermittlung, insbesondere Messung, der Raumtemperatur $T_L$.

Das mindestens eine Rechenwerk ist insbesondere ausgebildet und eingerichtet, mindestens einen Parameter der zweiten Parametergruppe mittels mindestens eines Parameters oder mehrerer oder aller Parameter der ersten Parametergruppe zu ermitteln, insbesondere zu berechnen. Insbesondere ist das mindestens eine Rechenwerk eingerichtet, mehrere oder alle Parameter der zweiten Parametergruppe jeweils mittels mindestens eines Parameters oder mehrerer oder aller Parameter der ersten Parametergruppe zu ermitteln, insbesondere zu berechnen. Hierzu wird der mindestens eine Parameter oder werden die mehreren oder alle Parameter der ersten Parametergruppe an das Rechenwerk übertragen und mit diesem verarbeitet, um den mindestens einen Parameter oder mehrere oder alle Parameter der zweiten Parametergruppe zu ermitteln, insbesondere zu berechnen.

Wenn mehrere Rechenwerke vorhanden sind, so werden die notwendigen Berechnungen beispielsweise auf die einzelnen Rechenwerke verteilt ausgeführt, zum Beispiel um Energie in der Vorlaufbaugruppe zu sparen. Das Ergebnis der Berechnung der Referenzleistung des Heizkörpers wird z. B. nur in dem Rechenwerk benötigt, in dem auch der bewertete Verbrauchswert berechnet wird, und deshalb wird vorteilhafterweise auch die Referenzleistung nur in diesem Rechenwerk berechnet. Bei mehreren Rechenwerken ist somit insbesondere vorgesehen, dass diese mehreren Rechenwerke zusammen eingerichtet und ausgebildet sind zur Ermittlung aller Parameter der zweiten Parametergruppe mittels jeweils mindestens eines Parameters der ersten Parametergruppe. Dabei ist insbesondere vorgesehen, dass jeder Parameter der zweiten Parametergruppe mittels jeweils nur einem der mehreren Rechenwerke ermittelt wird. Alternativ kann beispielsweise vorgesehen sein, dass mindestens einer, mehrere oder alle Parameter der zweiten Parametergruppe jeweils mittels mehreren oder allen Rechenwerken ermittelt wird/werden, beispielsweise aus Redundanzgründen.

Das mindestens eine Rechenwerk kann in der Vorlaufbaugruppe, in der Heizkörperoberflächenbaugruppe, in der dritten Baugruppe oder in der vierten Baugruppe angeordnet sein. Eine weitere Ausführungsform sieht vor, dass mehrere der Baugruppen oder jede Baugruppe, insbesondere die Vorlaufbaugruppe, die Heizkörperoberflächenbaugruppe, die dritte Baugruppe und/oder die vierte Baugruppe, jeweils ein zugehöriges Rechenwerk umfassen. In dieser weiteren Ausführungsform kommunizieren die mehreren Rechenwerke miteinander, beispielsweise drahtlos, zum Beispiel per Funk oder Bluetooth, oder drahtgebunden.

Die Kommunikationseinrichtung der Vorlaufbaugruppe ist insbesondere ausgebildet und eingerichtet zur Kommunikation mit der Rücklaufbaugruppe und/oder einer dritten Baugruppe und/oder einer vierten Baugruppe.

Die Kommunikationseinrichtung der Rücklaufbaugruppe ist insbesondere ausgebildet und eingerichtet zur Kommunikation mit der Vorlaufbaugruppe und/oder der dritten Baugruppe und/oder der vierten Baugruppe.

Der mindestens eine Raumtemperatursensor und das mindestens eine Rechenwerk sind vorteilhafterweise jeweils in der Vorlaufbaugruppe oder in der Rücklaufbaugruppe oder in einer im Folgenden noch näher beschriebenen dritten Baugruppe, wenn in der Heizkostenverteilervorrichtung vorhanden, angeordnet. Das mindestens eine Rechenwerk kann beispielsweise auch in einer im Folgenden noch näher beschriebenen vierten Baugruppe, wenn in der Heizkostenverteilervorrichtung vorhanden, angeordnet sein. Es muss jedoch mindestens ein Raumtemperatursensor und mindestens ein Rechenwerk vorhanden sein und in einer dieser Baugruppen der Heizkostenverteilervorrichtung angeordnet sein. Die Heizkostenverteilervorrichtung kann zusätzlich auch noch einen oder mehrere weitere Raumtemperatursensoren und/oder ein oder mehrere weitere Rechenwerke aufweisen. Der mindestens eine weitere Raumtemperatursensor ist dann beispielsweise in der Vorlaufbaugruppe oder in der Rücklaufbaugruppe oder in der dritten Baugruppe, wenn in der Heizkostenverteilervorrichtung vorhanden, angeordnet. Das mindestens eine weitere Rechenwerk ist dann beispielsweise in der Vorlaufbaugruppe oder in der Rücklaufbaugruppe oder in der dritten Baugruppe, wenn in der Heizkostenverteilervorrichtung vorhanden, oder in der vierten Baugruppe, wenn in der Heizkostenverteilervorrichtung vorhanden, angeordnet. Vorteilhafterweise ist in jeder der genannten Baugruppen jeweils nur maximal ein Raumtemperatursensor und/oder maximal nur ein Rechenwerk angeordnet. Vorteilhaft kann es z. B. sein, den Raumtemperatursensor allein oder zusätzlich in der dritten Baugruppe, die sich im Raum mit dem Heizkörper befindet, aber thermisch entkoppelt von diesem ist, anzuordnen. Eine Anordnung nur in der dritten Baugruppe hat den Vorteil, dass die Raumtemperaturmessung dort nicht durch die Wärmeabgabe des Heizkörpers verfälscht werden kann. Alternativ kann der Raumtemperatursensor in der dritten Baugruppe beispielsweise zusätzlich zu einem Raumtemperatursensor in der Vorlaufbaugruppe und/oder in der Rücklaufbaugruppe vorgesehen sein. Mit Hilfe eines solchen zusätzlichen Raumtemperatursensors in der dritten Baugruppe lässt sich die Plausibilität der Messergebnisse der Raumtemperatursensoren in der Vorlaufbaugruppe und/oder in der Rücklaufbaugruppe kontrollieren. Somit weisen die Vorlaufbaugruppe, die Rücklaufbaugruppe und die dritte Baugruppe, wenn in der Heizkostenverteilervorrichtung vorhanden, optional einen Raumtemperatursensor auf, wobei mindestens eine dieser Baugruppen der Heizkostenverteilervorrichtung einen Raumtemperatursensor aufweisen muss. Zudem weisen die Vorlaufbaugruppe, die Rücklaufbaugruppe, die dritte Baugruppe, wenn in der Heizkostenverteilervorrichtung vorhanden, und die vierte Baugruppe, wenn in der Heizkostenverteilervorrichtung vorhanden, optional ein Rechenwerk auf, wobei mindestens eine dieser Baugruppen ein Rechenwerk aufweisen muss. Alle vorhandenen Baugruppen der Heizkostenverteilervorrichtung können somit optional ein Rechenwerk aufweisen. Beispielsweise weisen alle vorhandenen Baugruppen, insbesondere auch die dritte und/oder vierte Baugruppe, wenn vorhanden, ein Rechenwerk auf, um aufwendigere Berechnungen in der Vorlaufbaugruppe und/oder in der Rücklaufbaugruppe zu vermeiden.

Die Heizkostenverteilervorrichtung umfasst des Weiteren mindestens eine elektrische Energieversorgung. Beispielsweise können mehrere oder alle Baugruppen jeweils eine eigene elektrische Energieversorgung aufweisen. Es kann auch vorgesehen sein, dass mehrere oder alle Baugruppen eine gemeinsame elektrische Energieversorgung aufweisen. Die elektrische Energieversorgung oder die jeweilige elektrische Energieversorgung der jeweiligen Baugruppen oder der mehreren Baugruppen umfasst beispielsweise eine Batterie, welche beispielsweise auch als ein wieder aufladbarer Akkumulator ausgebildet sein kann, und/oder einen Netzanschluss an ein elektrisches Energieversorgungsnetz zur elektrischen Netzstromversorgung.

Die oben beschriebene Möglichkeit von Raumtemperatursensoren in mehreren Baugruppen der Heizkostenverteilervorrichtung ermöglicht beispielsweise eine verbesserte Redundanz durch diese mehreren Raumtemperatursensoren und die Möglichkeit der Plausibilisierung der Messwerte. Die oben beschriebene Möglichkeit von Rechenwerken in mehreren oder allen Baugruppen der Heizkostenverteilervorrichtung hat ebenfalls den Vorteil der Redundanz und ermöglicht es zudem, auch Berechnungen auf verschiedene Rechenwerke zu verteilen. Ist dann eines der beteiligten Rechenwerke in einer Baugruppe mit Netzstromversorgung angeordnet, so kann beispielsweise eine Verlagerung der Rechenleistung in diese Baugruppe zur Entlastung von Energiebudgets der anderen, beispielsweise mit Batterie versorgten Baugruppen genutzt werden.

Die Komponenten der Vorlaufbaugruppe sind vorteilhafterweise jeweils an und/oder in der Vorlaufleitung angeordnet oder anordbar. Dabei ist die Vorlaufleitung des Heizkörpers eine Leitung für das Wärmeträgermedium, welche ausschließlich zu diesem Heizkörper führt. Die Komponenten der Vorlaufbaugruppe sind dabei vorteilhafterweise jeweils direkt am Heizkörper an und/oder in der Vorlaufleitung angeordnet. Entsprechend wird auch die Vorlauftemperatur Tv an dieser Position, vorteilhafterweise direkt am Heizkörper, in der Vorlaufleitung gemessen.

Die Komponenten der Rücklaufbaugruppe sind vorteilhafterweise jeweils an und/oder in der Rücklaufleitung angeordnet oder anordbar. Dabei ist die Rücklaufleitung des Heizkörpers eine Leitung für das Wärmeträgermedium, welche ausschließlich von diesem Heizkörper wegführt. Die Komponenten der Rücklaufbaugruppe sind dabei vorteilhafterweise jeweils direkt am Heizkörper an und/oder in der Rücklaufleitung angeordnet. Entsprechend wird auch die Rücklauftemperatur $T_R$ an dieser Position, vorteilhafterweise direkt am Heizkörper, in der Rücklaufleitung gemessen.

Die Vorlaufleitung des Heizkörpers ist eine Leitung für das Wärmeträgermedium, welche ausschließlich zu diesem Heizkörper führt, und die Rücklaufleitung des Heizkörpers ist eine Leitung für das Wärmeträgermedium, welche ausschließlich von diesem Heizkörper wegführt.

Mittels des Vorlauftemperatursensors wird die Vorlauftemperatur Tv des den Heizkörper durchströmenden Wärmeträgermediums ermittelt, insbesondere gemessen. Mittels des Rücklauftemperatursensors wird die Rücklauftemperatur $T_R$ des den Heizkörper durchströmenden Wärmeträgermediums ermittelt, insbesondere gemessen. Mittels des Volumenstromsensors, wenn dieser vorhanden ist, wird der Volumenstrom m des den Heizkörper durchströmenden Wärmeträgermediums ermittelt. Alternativ oder zusätzlich kann beispielsweise vorgesehen sein, dass der Volumenstromsensor in der Rücklaufbaugruppe angeordnet ist und dort der Volumenstrom m des den Heizkörper durchströmenden Wärmeträgermediums ermittelt wird, oder es kann alternativ zu diesen Varianten vorgesehen sein, dass, insbesondere in der Vorlaufbaugruppe, das Heizkörperventil mit bekanntem konstantem Volumenstrom m vorhanden ist, wobei im Verfahren dann dieser bekannte konstante Volumenstrom m verwendet wird. Mittels des Raumtemperatursensors wird die Raumtemperatur $T_L$ des Raums eines Gebäudes, in welchem der Heizkörper angeordnet ist, insbesondere die Raumlufttemperatur der Raumluft dieses Raums ermittelt, insbesondere gemessen. Die Kommunikationseinrichtungen dienen insbesondere einer Übertragung von mittels des jeweiligen Sensors ermittelten Sensorwerten zum Rechenwerk. Im Rechenwerk werden aus den beschriebenen ermittelten, insbesondere gemessenen Sensorwerten die oben genannten anderen Parameter ermittelt, insbesondere berechnet.

In einer möglichen Ausführungsform der Heizkostenverteilervorrichtung ist die Vorlaufbaugruppe als ein Heizkörperventil mit Thermostatkopf ausgebildet, das mit konstantem Volumenstrom oder zur Durchführung eines Proportionalbetriebs ausgebildet ist, in welchem eine direkte Proportionalität zwischen einem Ventilhub des Heizkörperventils und dem Volumenstrom m durch das Heizkörperventil hindurch besteht, oder die Vorlaufbaugruppe umfasst ein solches Heizkörperventil mit Thermostatkopf. Dadurch ist der Volumenstrom m bekannt oder kann auf besonders einfache Weise durch Erfassung des jeweiligen Ventilhubs ermittelt werden. Auch bei Verwendung des Heizkörperventils mit konstantem Volumenstrom m wird, wie oben beschrieben, zweckmäßigerweise das Vorliegen des Volumenstroms m für das Verfahren ermittelt.

In einer möglichen Ausführungsform der Heizkostenverteilervorrichtung umfassen die Vorlaufbaugruppe und die Rücklaufbaugruppe jeweils einen Volumenstromsensor, welcher insbesondere ausgebildet und eingerichtet ist zur Ermittlung, insbesondere Messung, des Volumenstroms m. Dadurch wird beispielsweise eine Redundanz bezüglich der Volumenstromermittlung erreicht.

In einer weiteren möglichen Ausführungsform der Heizkostenverteilervorrichtung ist kein Volumenstromsensor vorhanden, insbesondere wenn bereits am Heizkörper ein Heizkörperventil mit bekanntem, konstantem Volumenstrom m angeordnet ist. Dieses ist dann vorteilhafterweise ein Bestandteil der Vorlaufbaugruppe.

In einer möglichen Ausführungsform umfasst die Heizkostenverteilervorrichtung die vom Heizkörper beabstandete, oben bereits erwähnte, dritte Baugruppe, insbesondere mit einer weiteren Kommunikationseinrichtung, die insbesondere ausgebildet und eingerichtet ist zur Kommunikation mit der Vorlaufbaugruppe und/oder der Rücklaufbaugruppe und/oder der vierten Baugruppe, wobei die dritte Baugruppe im selben Raum des Gebäudes mit dem Heizkörper anordbar oder angeordnet ist, d. h. zumindest zur Anordnung im selben Raum, in welchem auch der Heizkörper angeordnet ist, vorgesehen ist. Der mindestens eine Raumtemperatursensor oder ein weiterer Raumtemperatursensor, welcher ausgebildet und eingerichtet ist zur Ermittlung, insbesondere Messung, der Raumtemperatur, kann in dieser dritten Baugruppe angeordnet sein. Das mindestens eine Rechenwerk oder mindestens ein weiteres Rechenwerk, welches ausgebildet und eingerichtet ist zur Ermittlung, insbesondere Berechnung, mindestens eines Parameters der zweiten Parametergruppe mittels mindestens eines Parameters oder mehrerer oder aller Parameter der ersten Parametergruppe, insbesondere zur Ermittlung, insbesondere Berechnung, mehrerer oder aller Parameter der zweiten Parametergruppe jeweils mittels mindestens eines Parameters oder mehrerer oder aller Parameter der ersten Parametergruppe, kann in dieser dritten Baugruppe angeordnet sein. Der mindestens eine Parameter oder die mehreren oder alle Parameter der ersten Parametergruppe werden dann an das mindestens eine Rechenwerk und/oder an das mindestens eine weitere Rechenwerk übertragen und mit diesem verarbeitet, um den mindestens einen Parameter oder mehrere oder alle Parameter der zweiten Parametergruppe zu ermitteln, insbesondere zu berechnen.

In einer möglichen Ausführungsform umfasst die Heizkostenverteilervorrichtung die vom Heizkörper beabstandete, oben bereits erwähnte, vierte Baugruppe, insbesondere mit einer weiteren Kommunikationseinrichtung, die insbesondere ausgebildet und eingerichtet ist zur Kommunikation mit der Vorlaufbaugruppe und/oder der Rücklaufbaugruppe und/oder der dritten Baugruppe, wobei die vierte Baugruppe außerhalb des Raums anordbar oder angeordnet ist, in welchem der Heizkörper angeordnet ist Das mindestens eine Rechenwerk oder mindestens ein weiteres Rechenwerk, welches ausgebildet und eingerichtet ist zur Ermittlung, insbesondere Berechnung, mindestens eines Parameters der zweiten Parametergruppe mittels mindestens eines Parameters oder mehrerer oder aller Parameter der ersten Parametergruppe, insbesondere zur Ermittlung, insbesondere Berechnung, mehrerer oder aller Parameter der zweiten Parametergruppe jeweils mittels mindestens eines Parameters oder mehrerer oder aller Parameter der ersten Parametergruppe, kann in dieser vierten Baugruppe angeordnet sein. Der mindestens eine Parameter oder die mehreren oder alle Parameter der ersten Parametergruppe werden dann an das mindestens eine Rechenwerk und/oder an das mindestens eine weitere Rechenwerk übertragen und mit diesem verarbeitet, um den mindestens einen Parameter oder mehrere oder alle Parameter der zweiten Parametergruppe zu ermitteln, insbesondere zu berechnen.

In einer möglichen Ausführungsform der Heizkostenverteilervorrichtung ist der mindestens eine Raumtemperatursensor oder mindestens ein weiterer Raumtemperatursensor, welcher ausgebildet und eingerichtet ist zur Ermittlung, insbesondere Messung, der Raumtemperatur $T_L$, jeweils in der Vorlaufbaugruppe, in der Rücklaufbaugruppe oder in der dritten Baugruppe angeordnet.

In einer möglichen Ausführungsform der Heizkostenverteilervorrichtung ist das Rechenwerk oder mindestens ein weiteres Rechenwerk, welches ausgebildet und eingerichtet ist zur Ermittlung, insbesondere Berechnung, mindestens eines Parameters der zweiten Parametergruppe mittels mindestens eines Parameters oder mehrerer oder aller Parameter der ersten Parametergruppe, insbesondere zur Ermittlung, insbesondere Berechnung, mehrerer oder aller Parameter der zweiten Parametergruppe jeweils mittels mindestens eines Parameters oder mehrerer oder aller Parameter der ersten Parametergruppe, jeweils in der Vorlaufbaugruppe, in der Rücklaufbaugruppe, in der dritten Baugruppe oder in der vierten Baugruppe angeordnet. Der mindestens eine Parameter oder die mehreren oder alle Parameter der ersten Parametergruppe werden dann an das mindestens eine Rechenwerk und/oder an das mindestens eine weitere Rechenwerk übertragen und mit diesem verarbeitet, um den mindestens einen Parameter oder mehrere oder alle Parameter der zweiten Parametergruppe zu ermitteln, insbesondere zu berechnen. Wenn mehrere Rechenwerke vorhanden sind, so werden die notwendigen Berechnungen beispielsweise auf die einzelnen Rechenwerke verteilt ausgeführt, zum Beispiel um Energie in der Vorlaufbaugruppe und/oder in der Rücklaufbaugruppe zu sparen. Das Ergebnis der Berechnung der Referenzleistung des Heizkörpers wird z. B. nur in dem Rechenwerk benötigt, in dem auch der bewertete Verbrauchswert berechnet wird, und deshalb wird vorteilhafterweise auch die Referenzleistung nur in diesem Rechenwerk berechnet.

Wie bereits erwähnt, besitzt zweckmäßigerweise jede Baugruppe der Heizkostenverteilervorrichtung eine Energieversorgung. Dies kann vorzugsweise eine Batterie und/oder eine Energieharvesting-Vorrichtung sein. Prinzipiell ist es natürlich auch denkbar, eine oder mehrere oder alle Baugruppen mit einer Netzversorgung auszustatten. Die Energieharvesting-Vorrichtung kann beispielsweise auch für mehrere oder alle Baugruppen zusammen vorgesehen sein.

Heizkostenverteiler, insbesondere auch die hier beschriebene Heizkostenverteilervorrichtung, sind Messgeräte zur Messung einer von einem Heizkörper abgegebenen Wärmemenge. Man unterscheidet prinzipiell zwei Wirkprinzipien.

Ein Wirkprinzip beruht auf den Messungen der Vorlauftemperatur Tv und der Rücklauftemperaturen $T_R$ sowie des Volumenstromes m des den Heizkörper durchströmenden Wärmeträgermediums und einer Integration über der Zeit t. Die Messung des Volumenstroms m ist dabei nur notwendig, wenn kein Heizkörperventil mit konstantem Volumenstrom m verwendet wird. Wird ein solches Heizkörperventil mit konstantem Volumenstrom m verwendet, dann wird für das Verfahren der bekannte konstante Volumenstrom m verwendet, wie oben bereits erwähnt. Die Wärmemenge oder der mit der durch den Heizkörper abgegebenen Wärmemenge korrespondierende Verbrauchswert Q1 ist dann:

$$Q1 = c \int m \left( T_V - T_R \right) dt \qquad (1)$$

Dabei ist c eine spezifische Wärmekapazität des Wärmeträgermediums. Diese Vorgehensweise ist das Prinzip eines Wärmemengenmessers. Diese Messgeräte können sehr genau eine verbrauchte Wärmemenge messen. Sie sind jedoch relativ teuer und ihre Montage ist vergleichsweise aufwendig.

Ein weiteres Wirkprinzip beruht auf der Ermittlung der Übertemperatur, d. h. der Temperaturdifferenz aus Oberflächentemperatur To und Raumtemperatur $T_L$. Dazu wird der Heizkostenverteiler in der vorgegebenen relativen Höhe h% am Heizkörper montiert, in der die Oberflächentemperatur To als eine gute Näherung der mittleren Oberflächentemperatur des Heizkörpers gemessen werden kann. Die Oberflächentemperatur To des Heizkörpers in der vorgegebenen relativen Höhe h% am Heizkörper wird also direkt gemessen oder aus Vorlauftemperatur Tv und Rücklauftemperatur $T_R$ berechnet. Die Temperaturdifferenz von Oberflächentemperatur To und gemessener Raumtemperatur $T_L$, d. h. die Übertemperatur des Heizkörpers, wird mit dem Heizkörperexponenten n potenziert und über die Zeit t integriert. Die Wärmemenge oder der mit der durch den Heizkörper abgegebenen Wärmemenge korrespondierende Verbrauchswert Q2 ist dann:

$$Q2 = K \int \left( T_o - T_L \right)^n dt \qquad (2)$$

In der Formel (2) ist K ein Korrekturfaktor. Bei bisher bekannten Heizkostenverteilern werden bei dieser Vorgehensweise sowohl die Oberflächentemperatur To des Heizkörpers in der vorgegebenen relativen Höhe h% am Heizkörper als auch die Raumtemperatur $T_L$ direkt gemessen.

Eine zu Formel (2) alternative Berechnung der Wärmemenge besteht darin, aus der Vorlauftemperatur Tv, der Rücklauftemperatur $T_R$ und der Raumtemperatur $T_L$ die logarithmische Übertemperatur $\Delta T_{ln}$ zu berechnen:

$$\Delta T_{ln} = \frac{T_V - T_R}{\ln(\frac{T_V - T_L}{T_R - T_L})} \qquad (3)$$

und diese logarithmische Übertemperatur $\Delta T_{ln}$, potenziert mit dem Heizkörperexponenten n, über der Zeit zu integrieren und mit dem Korrekturfaktor K zu multiplizieren:

$$Q3 = K \int {\Delta T_{ln}}^{n} \, dt \qquad (4)$$

Der oben bereits erwähnte Korrekturfaktor K setzt sich dabei aus einem Skalierungsfaktor sowie zumindest den Korrekturgrößen Kc-Wert und $K_Q$-Wert zusammen. Der Kc-Wert dient einer Korrektur unterschiedlicher thermischer Kopplungen der Temperatursensoren der Heizkostenverteilervorrichtung, insbesondere des Vorlauf- und des Rücklauf- sowie des Raumtemperatursensors. Der Ko-Wert skaliert unterschiedliche Nennleistungen von Heizkörpern.

Kompakte Geräte des zweiten Wirkprinzips, zur Montage auf der Heizkörperoberfläche, werden umgangssprachlich Heizkostenverteiler bzw. kompakte Heizkostenverteiler genannt. Diese Geräte sind relativ preiswert, einfach zu montieren und deshalb weit verbreitet.

Nachteil dieser Geräte ist, dass für eine korrekte Funktion eine Identifikation des jeweiligen Heizkörpers erforderlich ist, um die Referenzleistung $Q_R$ des Heizkörpers und thermische Kopplungsfaktoren, insbesondere c-Werte, zuordnen zu können. Diese Referenzleistung $Q_R$ des Heizkörpers wird in einer Labormessung bei einer Typprüfung des Heizkörpers ermittelt. Die thermischen Kopplungsfaktoren werden in Labormessungen von Heizkörper und Heizkostenverteiler gemessen und in Heizkostenverteiler-Hersteller-Datenbanken bereitgestellt. Bei über 40.000 verschiedenen Heizkörpern ist eine korrekte Erkennung des jeweiligen Heizkörpers und damit die fehlerfrei Zuordnung der Referenzleistung $Q_R$ und der thermischen Kopplungsfaktoren keineswegs trivial und kann letztendlich zu sehr großen Messfehlern führen.

Ein weiterer Nachteil dieses Prinzips ist, das es nur für große Wärmeträgermediumströme, d. h. nur für große Volumenströme m, genaue Ergebnisse liefert. Heutige Heizungen arbeiten jedoch aus Gründen einer Kostenoptimierung und aufgrund einer sehr guten Dämmung moderner Häuser bei kleinen Wärmeträgermediumströmen, d. h. bei kleinen Volumenströmen m.

Als weiterer Nachteil der kompakten Heizkostenverteiler ist ihre Montage auf dem Heizkörper zu bewerten. Heute sind viele Heizkörper Designelemente und ein Heizkostenverteiler wird von vielen als optisch störend empfunden.

Diese Heizkostenverteiler werden nach EN 834:2013 + AC:2015 (D) geprüft und für die Heizkostenverteilung zugelassen. Es ist zu bezweifeln, ob es derzeit einen einzigen Heizkostenverteiler gibt, der die Forderung 8.1 dieser EN 834:2013 + AC:2015 (D) im Wortsinne erfüllen kann. "Die Bewertung mit $K_Q$ ist auf der Grundlage des tatsächlich installierten Heizkörpers vorzunehmen."

Der Bewertungsfaktor $K_Q$, d. h. der $K_Q$-Wert, abgeleitet von der Referenzleistung des installierten Heizkörpers, wird heute auf der Basis einer Typprüfung eines einzelnen Heizkörpers im Labor ermittelt. Üblicherweise entspricht der Bewertungsfaktor $K_Q$ dem Verhältnis der Normwärmeleistung des zu bewertenden Heizkörpers zur Normwärmeleistung eines Basisheizkörpers (z. B. 1000 Watt). Die Anzeige an einem Heizkörper mit einer Normwärmeleistung von 1000 Watt wird also mit dem Faktor $K_Q$ = 1,0 bewertet. Eine Normwärmeleistung von 1386 Watt ergibt ein $K_Q$ = 1,39. Somit können unvermeidbare, individuelle Unterschiede, insbesondere auch bei seit Jahrzehnten, teilweise in verschiedenen Werken, produzierten Heizkörpern, nicht berücksichtigt werden. Alterung und Einbaueffekte bleiben ebenfalls unberücksichtigt.

Die erfindungsgemäße Lösung überwindet diese Nachteile und ermöglicht zudem eine Zulassung dieser Heizkostenverteilervorrichtung nach EN 834:2013 + AC:2015 (D), da vorteilhafterweise zumindest ein mit der durch den Heizkörper abgegebenen Wärmemenge korrespondierender Verbrauchswert Q2 auf der Basis einer für die Wärmeabgabe des Heizkörpers maßgeblichen Temperatur in Form der Übertemperatur des Heizkörpers, d. h. der Temperaturdifferenz aus Oberflächentemperatur To und Raumtemperatur $T_L$, des Heizkörperexponenten n und der Referenzleistung $Q_R$ des Heizkörpers ermittelt wird. Die erfindungsgemäße Lösung, insbesondere das hier beschriebene Verfahren, ermöglicht es insbesondere, die hier beschriebene, insbesondere erfindungsgemäße, Heizkostenverteilervorrichtung derart zu betreiben, dass die Vorgaben der EN 834:2013 + AC:2015 (D) erfüllt werden.

Zudem muss diese Heizkostenverteilervorrichtung durch die erfindungsgemäße Lösung nicht auf dem Heizkörper, d. h. insbesondere nicht auf der sichtbaren Frontflächenseite des Heizkörpers, montiert werden, sondern es ist nur erforderlich, Komponenten dieser Heizkostenverteilervorrichtung auf die oben beschriebene Weise an und/oder in der Vorlaufleitung und an und/oder in der Rücklaufleitung des Heizkörpers zu montieren. Dabei ist die Vorlaufleitung des Heizkörpers eine Leitung für das Wärmeträgermedium, welche ausschließlich zu diesem Heizkörper führt, und die Rücklaufleitung des Heizkörpers ist eine Leitung für das Wärmeträgermedium, welche ausschließlich von diesem Heizkörper wegführt. Die Komponenten sind dabei vorteilhafterweise direkt am Heizkörper an und/oder in der Vorlaufleitung bzw. an und/oder in der Rücklaufleitung angeordnet.

Mittels der erfindungsgemäßen Lösung wird es zudem, wie oben bereits erwähnt, ermöglicht, die Oberflächentemperatur To des Heizkörpers in der vorgegebenen relativen Höhe h% am Heizkörper, die logarithmische Übertemperatur $\Delta T_{ln}$ des Heizkörpers, den Heizkörperexponent n des Heizkörpers und die Referenzleistung $Q_R$ des Heizkörpers zu ermitteln und damit Verbrauchswerte Q1, Q2, Q3 sowohl nach den bekannten Wirkprinzipien auf der Basis der Volumenstrommessung als auch auf Basis der Messung der Oberflächentemperatur To des Heizkörpers in der vorgegebenen relativen Höhe h% am Heizkörper zu bilden, wodurch die Heizkostenverteilervorrichtung zulassungsfähig nach EN 834:2013 + AC:2015 (D) ist. Es wird somit mindestens ein mit einer durch den Heizkörper abgegebenen Wärmemenge korrespondierender Verbrauchswert Q1, Q2, Q3 ermittelt.

Wie bereits oben beschrieben, ist die Heizkostenverteilervorrichtung vorteilhafterweise als ein Heizkostenverteilersystem mit zumindest zwei unabhängigen Baugruppen ausgebildet, die vorteilhafterweise miteinander kommunizieren können. Mindestens eine dieser beiden Baugruppen, d. h. die Vorlaufbaugruppe und/oder die Rücklaufbaugruppe, misst mittels ihres Volumenstromsensors einen Heizmittelfluss, d. h. den Volumenstrom m des Wärmeträgermediums, und eine Medientemperatur, d. h. die Vorlauftemperatur Tv bzw. Rücklauftemperatur $T_R$, sowie die Raumtemperatur $T_L$, wenn diese nicht von der dritten Baugruppe gemessen wird, und überträgt diese Messgrößen zu mindestens einer anderen Baugruppe, welche das Rechenwerk aufweist. Weist der Heizkörper das Heizkörperventil mit konstantem Volumenstrom m auf, beispielsweise das ebenfalls oben beschriebene Heizkörperventil mit konstantem Volumenstrom m und Thermostatkopf, beispielsweise als Bestandteil der Heizkostenverteilervorrichtung, insbesondere von deren Vorlaufbaugruppe, dann ist die Messung des Volumenstroms m nicht erforderlich, sondern es wird dann stattdessen der bekannte konstante Volumenstrom m verwendet. Es ist dann jedoch die Ermittlung des Vorliegens dieses Volumenstroms m erforderlich, beispielsweise anhand der gemessenen Vorlauftemperatur oder mittels eines Öffnungssensors am Heizkörperventil. Der bekannte konstante Volumenstrom liegt beispielsweise nur dann vor, wenn mittels des Öffnungssensors festgestellt wird, dass das Heizkörperventil geöffnet ist, und/oder wenn mittels des Vorlauftemperatursensors ermittelt wird, dass die Vorlauftemperatur einen vorgegebenen Mindestwert erreicht oder überschritten hat oder sich erhöht hat.

Das Rechenwerk der Heizkostenverteilervorrichtung, welches in einer der Vorlaufbaugruppe oder in Rücklaufbaugruppe oder in der dritten oder vierten Baugruppe angeordnet ist, berechnet daraus die Oberflächentemperatur To des Heizkörpers in der vorgegebenen relativen Höhe h% am Heizkörper, die logarithmische Übertemperatur $\Delta T_{ln}$ des Heizkörpers, den Heizkörperexponent n des Heizkörpers, die Referenzleistung $Q_R$ des Heizkörpers und mindestens einen mit der durch den Heizkörper abgegebenen Wärmemenge korrespondierenden Verbrauchswert Q1, Q2, Q3, d. h. insbesondere einen oder mehrere Verbrauchswerte Q1, Q2, Q3 auf der Basis der Flussinformation gemäß obiger Formel (1) und/oder auf der Grundlage der Übertemperatur des Heizkörpers, d. h. der Temperaturdifferenz aus Oberflächentemperatur To und Raumtemperatur $T_L$, gemäß obiger Formel (2) und/oder auf der Grundlage der logarithmischen Übertemperatur $\Delta T_{ln}$ des Heizkörpers gemäß obiger Formel (4).

Erfindungsgemäß werden mindestens zwei Arbeitspunkte mit, zumindest im Wesentlichen konstantem Volumenstrom m, konstanter Vorlauftemperatur Tv und konstanter Rücklauftemperatur $T_R$ und insbesondere auch konstanter Raumtemperatur $T_L$ ermittelt.

In einer möglichen Ausführungsform des Verfahrens wird für jeden der Arbeitspunkte aus der Vorlauftemperatur Tv und der Rücklauftemperatur $T_R$ die Oberflächentemperatur To des Heizkörpers in der vorgegebenen relativen Höhe h% am Heizkörper ermittelt.

Erfindungsgemäß wird für jeden der Arbeitspunkte aus der Vorlauftemperatur Tv, der Rücklauftemperatur $T_R$ und dem Volumenstrom m eine Momentanleistung $Q_{A1}$, $Q_{A2}$ des Heizkörpers ermittelt.

Erfindungsgemäß wird für jeden der Arbeitspunkte aus der Vorlauftemperatur Tv, der Rücklauftemperatur $T_R$ und der Raumtemperatur $T_L$ die logarithmische Übertemperatur $\Delta T_{ln,A1}$, $\Delta T_{ln,A2}$ des Heizkörpers ermittelt.

Erfindungsgemäß wird aus den logarithmischen Übertemperaturen $\Delta T_{ln,A1}$, $\Delta T_{ln,A2}$ und Momentanleistungen $Q_{A1}$, $Q_{A2}$ der beiden Arbeitspunkte der Heizkörperexponent n ermittelt.

Erfindungsgemäß wird aus der logarithmischen Übertemperatur $\Delta T_{ln,A1}$, $\Delta T_{ln,A2}$ und der Momentanleistung $Q_{A1}$, $Q_{A2}$ mindestens eines der Arbeitspunkte und dem Heizkörperexponenten n die Referenzleistung $Q_R$ des Heizkörpers ermittelt.

In einer möglichen Ausführungsform des Verfahrens wird aus der Referenzleistung $Q_R$ des Heizkörpers der $K_Q$-Wert ermittelt.

Da die Relationen zwischen den Temperaturen am Heizkörper, d. h. zwischen der Vorlauftemperatur Tv, der Rücklauftemperatur $T_R$ und der Oberflächentemperatur To des Heizkörpers in der vorgegebenen relativen Höhe h% am Heizkörper, nicht konstant sind, sondern sich im allgemeinen, aufgrund der Volumenstromänderungen und der Wärmekapazitäten des Heizkörpers, auch gegenphasig, ändern können, ist für alle nachfolgend beschriebenen Berechnungen die Detektion des Zeitpunkts eines definierten Betriebszustandes am Heizkörper notwendig. (Es sei darauf hingewiesen, dass auch bei Verwendung eines Heizkörperventils mit konstantem Volumenstrom m eine Volumenstromänderung beim Öffnen und Schließen des Heizkörperventils erfolgt.) Ein gut geeigneter Zeitpunkt hierfür, im Folgenden als oben bereits erwähnter Arbeitspunkt bezeichnet, ist zum Beispiel die Erreichung eines relativen Maximums der gemessenen Rücklauftemperatur $T_R$. Um alle Prozessparameter dieses Zeitpunkts sicher detektieren zu können, verringern die Baugruppen vorteilhafterweise ihre Messintervalle, beispielsweise von vier Minuten in einem Normalbetrieb auf vier Sekunden zur Ermittlung der oben genannten Werte, d. h. Volumenstrom m des Wärmeträgermediums, wenn kein Heizkörperventil mit konstantem Volumenstrom m und dadurch dieser Wert des konstanten Volumenstroms m verwendet wird, sowie Vorlauftemperatur Tv, Rücklauftemperatur $T_R$ Raumtemperatur $T_L$. Hieraus werden anschließend die Oberflächentemperatur To des Heizkörpers in der vorgegebenen relativen Höhe h% am Heizkörper, die logarithmische Übertemperatur $\Delta T_{ln}$ des Heizkörpers, der Heizkörperexponent n des Heizkörpers und die Referenzleistung $Q_R$ des Heizkörpers ermittelt. Diese Ermittlung kann beispielsweise einmalig nach Installation der Heizkostenverteilervorrichtung erfolgen oder beispielsweise mehrmalig, zum Beispiel regelmäßig, beispielsweise jährlich oder in anderen Zeitabständen, um dadurch beispielsweise auch Veränderungen dieser Größen zu erfassen, welche beispielsweise durch Alterungseffekte verursacht werden. Wird der Volumenstrom m nicht gemessen, da das Heizkörperventil mit konstantem Volumenstrom m verwendet wird, so wird anstelle des Messwertes für den Volumenstrom m entsprechend der bekannte Wert des konstanten Volumenstroms m verwendet.

Für einen stabilen Arbeitspunkt, kontanter Volumenstrom m und konstante Werte der Vorlauftemperatur $T_R$ und der Raumtemperatur $T_L$, kann von einem linearen Verlauf der Oberflächentemperatur To des Heizkörpers auf dem Heizkörper ausgegangen werden. Ein stabiler Arbeitspunkt liegt insbesondere dann vor, wenn sich der Volumenstrom m, die Vorlauftemperatur Tv, die Rücklauftemperatur $T_R$ und die Raumtemperatur $T_L$ für einen vorgegebenen Zeitraum nicht ändern. Insbesondere kann dabei jeder neuen Raumtemperatur $T_L$ ein Arbeitspunkt zugeordnet werden.

Da die Vorlauftemperatur Tv von der Heizung im Allgemeinen fest vorgegeben wird und sich die Raumtemperatur $T_L$, aufgrund der hohen Wärmekapazität des Raumes, nur langsam verändert, wird sich auch die Rücklauftemperatur $T_R$ nach der Öffnung des Ventils und der Stabilisierung des Volumenstroms nach einer durch die Wärmekapazität des Heizkörpers vorgegebenen Zeit stabilisieren und für einen vorgegebenen Zeitraum als konstant anzusehen sein. Bei Arbeitspunkten mit unterschiedlicher Raumtemperatur $T_L$ und gleichen Vorlauftemperaturen Tv ergeben sich auch unterschiedliche Rücklauftemperaturen $T_R$, zumindest ein unterschiedliches relatives Maximum der Rücklauftemperatur $T_R$, bezogen auf die Vorlauftemperatur Tv. Beispielsweise ist die Vorlauftemperatur Tv stets gleich hoch, doch bei unterschiedlichen Raumtemperaturen $T_L$ ergeben sich aus der daraus resultierenden unterschiedlichen Wärmeabgabe des Heizkörpers an den Raum, insbesondere an die Raumluft des Raums, unterschiedliche Rücklauftemperaturen $T_R$.

Bei dem oben erwähnten linearen Verlauf der Oberflächentemperatur To des Heizkörpers in der vorgegebenen relativen Höhe h% am Heizkörper gilt somit:

$$T_O - T_R = h\% \left( T_V - T_R \right) \tag{5}$$

Das Rechenwerk des verteilten Heizkostenverteilersystems, d. h. der Heizkostenverteilervorrichtung, welches vorteilhafterweise in einer der Baugruppen angeordnet ist, berechnet für diesen definierten Zeitpunkt, d. h. für diesen Arbeitspunkt, aus Vorlauftemperatur Tv und Rücklauftemperatur $T_R$ die Oberflächentemperatur To des Heizkörpers in der vorgegebenen relativen Höhe h% am Heizkörper:

$$T_O = h\% \left( T_V - T_R \right) + T_R \tag{6}$$

Mit der Flussinformation, d. h. dem Volumenstrom m, ermittelt von der Vorlaufbaugruppe und/oder der Rücklaufbaugruppe, oder es wird der bekannte konstante Volumenstrom m des genutzten Heizkörperventils mit konstantem Volumenstrom m verwendet, wird nach folgender Formel (7) eine Momentanleistung Q des Heizkörpers berechnet.

$$Q = c \, m \left( T_V - T_R \right) \tag{7}$$

Wie beschrieben, wird dies für mindestens zwei Arbeitspunkte A1 und A2 durchgeführt, so dass entsprechend Formel (7) die Momentanleistungen $Q_{A1}$, $Q_{A2}$ für die beiden Arbeitspunkte ermittelt werden.

Das verteilte Heizkostenverteilersystem, d. h. die Heizkostenverteilervorrichtung, speichert den Wert der Momentanleistung $Q_{A1}$, $Q_{A2}$ des jeweiligen Arbeitspunktes zusammen mit den Arbeitspunktdaten Volumenstrom m, Vorlauftemperatur Tv, Rücklauftemperatur $T_R$ und Raumtemperatur $T_L$ des jeweiligen Arbeitspunktes.

Mit der bekannten Beziehungen für die logarithmische Übertemperatur $\Delta T_{ln}$ gemäß Formel (3) wird nun die

logarithmische Übertemperatur $\Delta T_{ln,A1}$, $\Delta T_{ln,A2}$ für jeden der Arbeitspunkte berechnet. Liegen die Daten von mindestens zwei unterschiedlichen Arbeitspunkten vor, so kann das verteilte Heizkostenverteilersystem, d. h. die Heizkostenverteilervorrichtung, daraus den Heizkörperexponenten n berechnen:

$$n = ln \frac{\frac{\Delta T_{ln,A1}}{\Delta T_{ln,A2}}}{\frac{Q_{A1}}{Q_{A2}}} \qquad (8)$$

Mit der bekannten Heizkörpergleichung

$$Q_R = Q \left(\frac{\Delta T_{ln,R}}{\Delta T_{ln}}\right)^n \qquad (9)$$

kann nun die Referenzleistung $Q_R$ des Heizkörpers berechnet werden. Diese Berechnung wird beispielsweise mit der logarithmischen Übertemperatur $\Delta T_{ln,A1}$, $\Delta T_{ln,A2}$ und Momentanleistung $Q_{A1}$, $Q_{A2}$ eines der Arbeitspunkte oder, beispielsweise zu Kontrollzwecken, separat jeweils mit der logarithmischen Übertemperatur $\Delta T_{ln,A1}$, $\Delta T_{ln,A2}$ mehrerer oder aller erfassten Arbeitspunkte ermittelt. Für $\Delta T_{ln}$ wird dann die logarithmische Übertemperatur $\Delta T_{ln,A1}$, $\Delta T_{ln,A2}$ des jeweiligen Arbeitspunktes und für Q die Momentanleistung $Q_{A1}$, $Q_{A2}$ des jeweiligen Arbeitspunktes in die Formel (9) eingesetzt. Die logarithmische Referenzübertemperatur $\Delta T_{ln,R}$ des jeweiligen Referenzsystems ist dabei ein vorgegebener und somit bekannter Wert für die Heizkostenverteilervorrichtung.

Die auf diese Weise ermittelte Referenzleistung $Q_R$ des Heizkörpers wird im Allgemeinen nicht der im Labor ermittelten Heizkörpernennleistung entsprechen, denn sie wird an abweichenden Arbeitspunkten und unter realen Einbaubedingungen an einem individuellen Heizköper ermittelt worden sein. Sie ist somit für den jeweiligen spezifischen Heizkörper vorteilhafterweise genauer als eine an einem typgleichen anderen Heizkörper im Labor ermittelte Heizköpernennleistung.

Mittels dieser ermittelten Referenzleistung $Q_R$ des Heizkörpers kann anschließend der $K_Q$-Wert als dimensionsloser Zahlenwert für die Referenzleistung $Q_R$ des Heizkörpers ermittelt werden. Dieser $K_Q$-Wert und dessen Ermittlung ist spezifisch für die jeweilige Heizkostenverteilervorrichtung, insbesondere entsprechend einer jeweils vorgegebenen Basisleistung der Heizkostenverteilervorrichtung. Der $K_Q$-Wert ist dabei insbesondere der Quotient aus der ermittelten Referenzleistung $Q_R$ des Heizkörpers zur vorgegebenen Basisleistung.

In einer möglichen Ausführungsform des Verfahrens werden c-Werte des Vorlauftemperatursensors und des Rücklauftemperatursensors und des mindestens einen Raumtemperatursensors bzw. der mehreren Raumtemperatursensoren (wenn die Heizkostenverteilervorrichtung mehrere Raumtemperatursensoren umfasst) für alle für die Vorlaufleitung bzw. Rücklaufleitung des Heizkörpers vorgesehenen Rohrleitungsdurchmesser und Rohrleitungsmaterialien ermittelt und berücksichtigt (üblicherweise sind der Durchmesser und das Material der jeweiligen Vorlaufleitung und Rücklaufleitung gleich). D. h. es werden diese c-Werte, welche Korrekturfaktoren der Temperatursensoren darstellen, berücksichtigt. Diese können, wie beschrieben, leicht einmalig im Labor ermittelt werden, denn sie sind heizkörperunabhängig und müssen nur für alle in Frage kommenden Rohrleitungsdurchmesser und Materialien ermittelt werden. In einer möglichen Ausführungsform des Verfahrens wird daher mittels der c-Werte ein Kc-Wert einmalig ermittelt. Insbesondere wird mittels der c-Werte, welche für den jeweiligen für die Vorlaufleitung bzw. Rücklaufleitung des Heizkörpers vorgesehenen Rohleitungsdurchmesser und für das jeweilige für die Vorlaufleitung bzw. Rücklaufleitung des Heizkörpers vorgesehene Rohrleitungsmaterial ermittelt wurden, der Kc-Wert für den jeweiligen für die Vorlaufleitung bzw. Rücklaufleitung des Heizkörpers vorgesehenen Rohleitungsdurchmesser und das jeweilige für die Vorlaufleitung bzw. Rücklaufleitung des Heizkörpers vorgesehene Rohrleitungsmaterial einmalig ermittelt. Es entfällt somit vollständig die Ermittlung eines sowohl heizkörper- als auch heizkostenverteilerspezifischen Kc-Wertes.

Vorteilhafterweise wird aus dem ermittelten $K_Q$-Wert und dem ermittelten Kc-Wert der Korrekturfaktor K ermittelt.

In einer möglichen Ausführungsform des Verfahrens wird mittels der spezifischen Wärmekapazität c des den Heizkörper durchströmenden Wärmeträgermediums, des Volumenstroms m, der Vorlauftemperatur Tv und der Rücklauftemperatur $T_R$, insbesondere gemäß Formel (1), und/oder mittels des aus dem $K_Q$-Wert und dem Kc-Wert ermittelten Korrekturfaktors K, der Oberflächentemperatur To des Heizkörpers in der vorgegebenen relativen Höhe h% am Heizkörper, der Raumtemperatur $T_L$ und dem Heizkörperexponenten n, insbesondere gemäß Formel (2), und/oder mittels des aus dem $K_Q$-Wert und dem Kc-Wert ermittelten Korrekturfaktors K, der logarithmischen Übertemperatur $\Delta T_{ln}$ des Heizkörpers und dem Heizkörperexponenten n, insbesondere gemäß Formel (4), ein mit der durch den Heizkörper abgegebenen Wärmemenge korrespondierender Verbrauchswert Q1, Q2, Q3 ermittelt. Diese Ermittlung des mindestens einen mit der durch den Heizkörper abgegebenen Wärmemenge korrespondierenden Verbrauchswertes Q1, Q2, Q3 insbesondere gemäß der Formel (1) und/oder (2) und/oder (4), erfolgt zweckmäßigerweise nicht nur anhand der oben erwähnten Arbeitspunkte, sondern auf für Heizkostenverteiler übliche und/oder vorgeschriebene Weise, zum Beispiel fortlaufend, insbesondere ständig, d. h. durchgehend, oder beispielsweise regelmäßig, insbesondere zu vorgegebenen Zeitpunkten und/oder in vorgegebenen Zeiträumen, und/oder auf vorgegebene Weise ereignisgesteuert.

Beispielsweise überträgt die Vorlaufbaugruppe ihre Messergebnisse zur Rücklaufbaugruppe mittels ihrer Kommunikationseinrichtung ereignisgesteuert nur zu vorgegebenen Zeitpunkten, zum Beispiel nur dann, wenn das Thermostatventil vollständig geöffnet ist. Die Rücklaufbaugruppe überwacht die Rücklauftemperatur. Beispielsweise kann, wenn das Ansteigen der Rücklauftemperatur über einen vorgegebenen, insbesondere einstellbaren, Schwellwert registriert wurde, auch diese Rücklaufbaugruppe die Kommunikation zwischen den Baugruppen initiieren.

Die Kommunikation zwischen den Baugruppen erfolgt beispielsweise drahtlos, beispielsweise bidirektional, beispielsweise eventgesteuert, insbesondere mit einer derart geringen Sendeleistung, dass die Kommunikation gerade noch ermöglicht ist, z.B. nur über wenige Meter möglich ist. Dies schützt diese Kommunikationsstrecke vor einer Beeinflussung von außen, spart Energie und verringert eine Hochfrequenzbelastung der Umgebung. Beispielsweise beträgt eine Sendeleistung für die Kommunikation von Baugruppen im selben Raum 0 dBm oder weniger, d. h. maximal 0 dBm, und/oder für die Kommunikation zwischen Baugruppen in verschiedenen Räumen, verschiedenen Wohnungen und/oder verschiedenen Gebäuden 10 dBm oder mehr, d. h. mindestens 10 dBm.

Beispielsweise versenden die Baugruppen bei ihrer Installation Installationstelegramme, die dazu dienen, Geräteidentifikationen aller zusammengehörigen Baugruppen der Heizkostenverteilervorrichtung untereinander auszutauschen. Sobald sich die Gruppe konstituiert hat, wird die Sendeleistung jeder einzelnen Übertragungsstrecke, z. B. zwischen Vorlaufbaugruppe und Heizkörperoberflächenbaugruppe, so weit verringert, dass eine Kommunikation gerade noch möglich ist, um Energie zu sparen. Dazu messen die Baugruppen die Eingangspegel der empfangenen Signale und teilen diese den sendenden Baugruppen mit. Diese berechnen dann, wie stark die Sendeleistung verringert werden kann, damit der minimal notwendige Eingangspegel von z. B. -90 dBm gerade noch erreicht wird.

Die Kommunikation zwischen den Baugruppen ist beispielsweise eventgesteuert, um Energie zu sparen. Es werden also im Allgemeinen nicht ständig Telegramme zwischen den Baugruppen ausgetauscht. Events, die Aussendungen veranlassen, können Ereignisse (Ventil geöffnet) oder bestimmte Zeitpunkte (Monatswechsel) sein. Das bedeutet, dass zum Beispiel im Sommer, wenn nicht geheizt wird, nur zu definierten Zeitpunkten ein Lebenszeichen ausgesendet wird. Registriert z. B. die Vorlaufbaugruppe die Öffnung des Heizkörperventils, so wird diese der Heizkörperoberflächenbaugruppe mitgeteilt.

Vorteilhafterweise ist jede Baugruppe der Heizkostenverteilervorrichtung dazu eingerichtet, einen Ausfall einer anderen Baugruppe der Heizkostenverteilervorrichtung festzustellen und über ihre Kommunikationseinrichtung eine Fehlernachricht, beispielsweise mit erhöhter Sendeleistung, an eines oder mehrere übergeordnete Systemgeräte zu senden. Dies wird im Verfahren entsprechend durchgeführt.

Prinzipiell ist es auch möglich, insbesondere eng benachbart angeordnete Baugruppen mit einer Leitung zu verbinden. In einem solchen Fall kann es sinnvoll sein, diese über die Leitung verbundenen Baugruppen nur mit einer Energieversorgung, z. B. einer Batterie auszustatten.

Die Heizkostenverteilervorrichtung ist vorteilhafterweise abwärtskompatibel zu kompakten Heizkostenverteilern nach dem oben beschriebenen Wirkprinzip der Oberflächentemperaturmessung. Insbesondere bei zu diesen kompakten Heizkostenverteilern identischer Ermittlung des Ko-Wertes kann die Heizkostenverteilervorrichtung somit in ein Heizkostenverteilersystem, welches solche kompakten Heizkostenverteiler aufweist, eingebunden werden.

Die Heizkostenverteilervorrichtung ist vorteilhafterweise dazu eingerichtet, insbesondere mittels des so genannten Chamäleon-Prinzips, ein Start- und Zählverhalten beliebiger kompakter Heizkostenverteiler anzuwenden, wie in der EP 1 592 948 B1 der Anmelderin beschrieben und insbesondere beansprucht.

Eine weitere vorteilhafte Eigenschaft der Heizkostenverteilervorrichtung ist, dass sie sicher Fehlmessungen durch Fremderwärmung des Heizkörpers beispielsweise durch direkte Sonneneinstrahlung, erkennen kann, indem sie beispielsweise prüft, ob eine Differenz zwischen der Vorlauftemperatur Tv und Rücklauftemperatur $T_R$ und ein Volumenstrom m des Wärmeträgermediums gleichzeitig vorliegen, oder indem sie in den verschiedenen Baugruppen, falls in mehreren Baugruppen Raumtemperatursensoren vorgesehen sind, die Raumtemperatur $T_L$ ermittelt und miteinander vergleicht. Eine Fremderwärmung bzw. Manipulation ist dann auszuschließen, wenn die Baugruppen den gleichen Wert der Raumtemperatur $T_L$, beispielsweise unter Berücksichtigung einer vorgegebenen Toleranz, ermittelt haben. Eine ausschließliche Fremderwärmung liegt ebenfalls vor, wenn eine Temperaturdifferenz zwischen Vorlauftemperatur Tv und Rücklauftemperatur $T_R$ bei geschlossenem Heizkörperventil festgestellt wird.

Das Rechenwerk und der oder die Raumtemperatursensoren können beispielsweise in der Vorlaufbaugruppe und/oder, gegebenenfalls redundant, in der Rücklaufbaugruppe der Heizkostenverteilervorrichtung zusammen mit der jeweiligen Kommunikationseinrichtung angeordnet sein. Alternativ ist es beispielsweise ebenso möglich, dass der Raumtemperatursensor und oder das Rechenwerk in der dritten Baugruppe im Raum mit dem Heizkörper angeordnet ist. In diesem Fall umfasst auch diese dritte Baugruppe eine Kommunikationseinrichtung, um die Messwerte mit den anderen Baugruppen auszutauschen oder zumindest die Messwerte der anderen Baugruppen zu empfangen. Solch eine dritte Baugruppe hat den Vorteil, dass die Raumtemperaturmessung völlig unbeeinflusst von der Heizung durchgeführt werden kann, d. h. es wird die Raumtemperatur $T_L$ nicht direkt am Heizkörper, d. h. in dessen unmittelbarer Nähe, gemessen, sondern in einem größeren Abstand zum Heizkörper im selben Raum.

Das Rechenwerk der Heizkostenverteilervorrichtung kann in einer beliebigen Baugruppe der Heizkostenverteilervorrichtung oder redundant in mehreren oder allen Baugruppen oder beispielsweise, alternativ oder redundant, außerhalb der die Sensoren beinhaltenden Baugruppen in der vierten Baugruppe angeordnet sein. Diese vierte Baugruppe ist beispielsweise eine externe Baugruppe. Sie kann beispielsweise auch eine Applikation auf einem Cloud-Server sein, die aus den Messdaten der einzelnen Sensoren auf die oben beschriebene Weise die Verbrauchswerte Q1, Q2, Q3 berechnet und dann vorteilhafterweise zur weiteren Verwendung zur Verfügung stellt. Vorteilhafterweise weist dann auch diese vierte Baugruppe eine Kommunikationseinrichtung zur Kommunikation mit den anderen Baugruppen auf, um insbesondere die Messwerte der Sensoren zu empfangen und mittels ihres Rechenwerkes die oben beschriebenen Berechnungen durchzuführen. Es ist insbesondere vorgesehen, dass Sensorwerte der Sensoren der Baugruppen über deren Kommunikationseinrichtungen jeweils zur Baugruppe mit dem Rechenwerk übertragen werden, um im Rechenwerk auf die oben beschrieben Weise verarbeitet zu werden.

In einer weiteren möglichen Ausführungsform sind mindestens zwei oder mehr oder alle Baugruppen der Heizkostenverteilervorrichtung, insbesondere mindestens die Vorlaufbaugruppe und die Rücklaufbaugruppe, durch Datenübertragungsleitungen miteinander verbunden. Das kann insbesondere dann sinnvoll sein, wenn Vorlaufleitung und Rücklaufleitung unmittelbar nebeneinander angeordnet sind.

Sind mindestens zwei Baugruppen durch eine Leitung verbunden, so kann diese auch zur Energieverteilung mit benutzt werden. In diesem Fall können beide Baugruppen aus einer Energieversorgung, z. B. einer Batterie, versorgt werden.

Die Kommunikation zwischen den Baugruppen kann somit kabellos oder kabelgebunden erfolgen, wobei die Kommunikationseinrichtungen entsprechend ausgebildet sind, um die entsprechende Kommunikation durchzuführen. Dabei kann auch eine Kombination von kabelgebundener Kommunikation zwischen zwei oder mehr Baugruppen und kabelloser Kommunikation zwischen zwei oder mehr Baugruppen der Heizkostenverteilervorrichtung vorgesehen sein, wobei die Kommunikationseinrichtungen jeweils entsprechend ausgebildet sind. Beispielsweise erfolgt die Kommunikation zwischen Vorlauf- und Rücklaufbaugruppe kabelgebunden und zwischen dritter und/oder vierter Baugruppe, wenn vorhanden, mit den anderen Baugruppen jeweils kabellos.

Ausführungsbeispiele der Erfindung werden im Folgenden anhand von Zeichnungen näher erläutert. Darin zeigen:

Figur 1   schematisch eine Ausführungsform einer Heizkostenverteilervorrichtung,

Figur 2   schematisch eine weitere Ausführungsform einer Heizkostenverteilervorrichtung,

Figur 3   schematisch eine weitere Ausführungsform einer Heizkostenverteilervorrichtung.

Einander entsprechende Teile sind in allen Figuren mit den gleichen Bezugszeichen versehen.

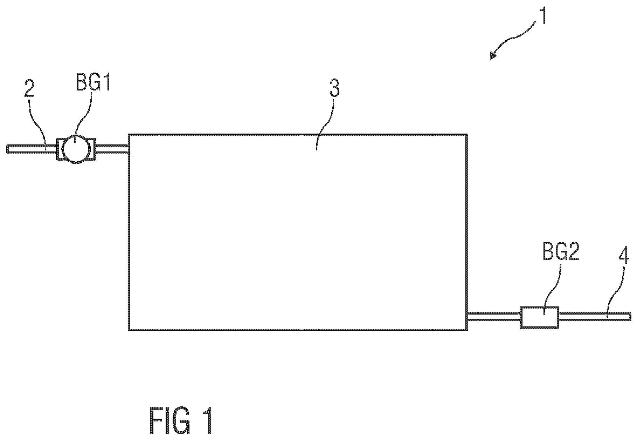

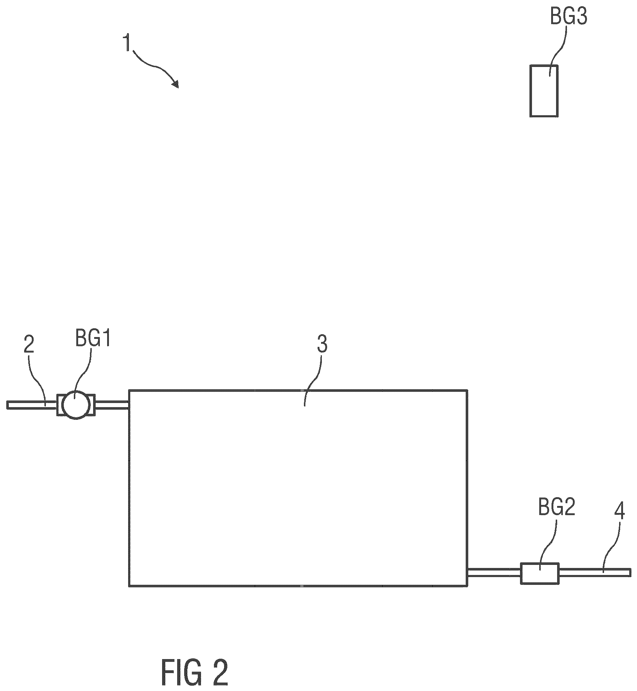

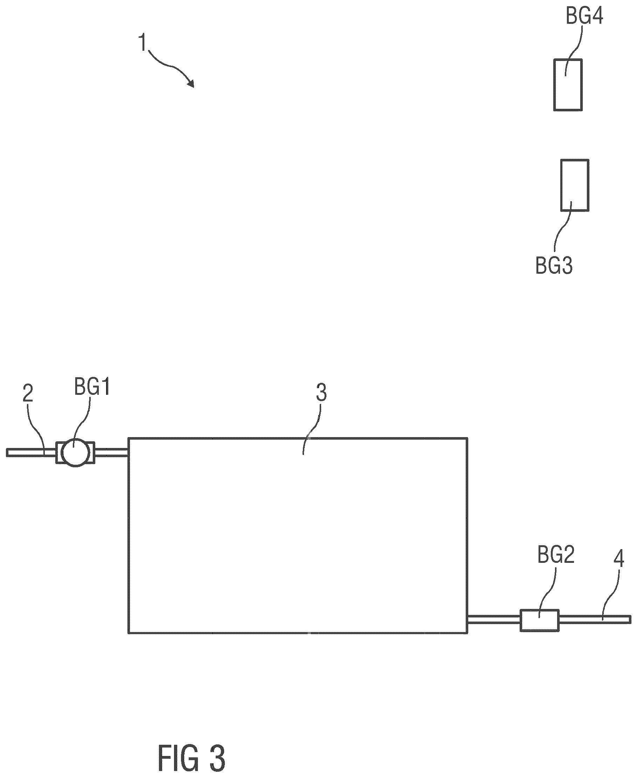

Figur 1 zeigt eine Ausführungsform einer als ein verteiltes Heizkostenverteilersystem ausgebildeten Heizkostenverteilervorrichtung 1. In dieser Ausführungsform umfasst die Heizkostenverteilervorrichtung 1 zwei Baugruppen BG1, BG2, eine an einer Vorlaufleitung 2 eines Heizkörpers 3 anordbare oder, wie hier dargestellt, bereits angeordnete Vorlaufbaugruppe BG1 mit einer Kommunikationseinrichtung und einem Vorlauftemperatursensor und eine an einer Rücklaufleitung 4 des Heizkörpers 3 anordbare oder, wie hier dargestellt, bereits angeordnete Rücklaufbaugruppe BG2 mit einer Kommunikationseinrichtung und einem Rücklauftemperatursensor. Diese beiden Baugruppen BG1, BG2 mit dieser jeweiligen Mindestausstattung sind auch in den beiden weiteren Ausführungsformen gemäß den Figuren 2 und 3 vorhanden. Des Weiteren umfasst die Heizkostenverteilervorrichtung 1, sowohl in der in Figur 1 dargestellten Ausführungsform als auch in den Ausführungsformen gemäß den Figuren 2 und 3, mindestens einen in der Vorlaufbaugruppe BG1 oder Rücklaufbaugruppe BG2 angeordneten Volumenstromsensor oder alternativ oder zusätzlich ein Heizkörperventil mit konstantem Volumenstrom m, wobei dann, alternativ oder zusätzlich, für das im Folgenden beschriebene Verfahren der bekannte konstante Volumenstrom m verwendet wird. Zudem umfasst die Heizkostenverteilervorrichtung 1, sowohl in der in Figur 1 dargestellten Ausführungsform als auch in den Ausführungsformen gemäß den Figuren 2 und 3, mindestens einen Raumtemperatursensor und mindestens ein Rechenwerk. In allen dargestellten Ausführungsformen kann vorgesehen sein, dass sowohl die Vorlaufbaugruppe BG1 als auch die Rücklaufbaugruppe BG2 jeweils einen Volumenstromsensor aufweisen, beispielsweise auch wenn bereits ein Heizkörperventil mit konstantem Volumenstrom m am Heizkörper verwendet wird. Alternativ ist bei Verwendung des Heizkörperventils mit konstantem Volumenstrom m kein Volumenstromsensor vorgesehen.

Bei der Ausführungsform gemäß Figur 1 ist der Raumtemperatursensor in der Vorlaufbaugruppe BG1 oder in der Rücklaufbaugruppe BG2 angeordnet oder sowohl die Vorlaufbaugruppe BG1 als auch die Rücklaufbaugruppe BG2 weisen jeweils einen Raumtemperatursensor auf. Ebenso ist die Recheneinheit in der Vorlaufbaugruppe BG1 oder in der Rücklaufbaugruppe BG2 angeordnet oder sowohl die Vorlaufbaugruppe BG1 als auch die Rücklaufbaugruppe BG2 weisen jeweils eine Recheneinheit auf.

Die Vorlaufbaugruppe BG1 ist beispielsweise als ein Heizkörperventil mit Thermostatkopf ausgebildet, dass beispielsweise mit konstantem Volumenstrom oder im Proportionalbetrieb betrieben wird, bei dem eine direkte Proportionalität zwischen einem Ventilhub und einem Volumenstrom m eines den Heizkörper 3 durchströmenden Wärmeträgermediums existiert, oder diese Vorlaufbaugruppe BG1 umfasst ein solches Heizkörperventil mit Thermostatkopf. Der Vorlauftemperatursensor in der Vorlaufbaugruppe BG1 erfasst eine Vorlauftemperatur Tv des Heizkörpers 3. Der Rücklauftemperatursensor in der Rücklaufbaugruppe BG2 erfasst eine Rücklauftemperatur $T_R$ des Heizkörpers 3. Sind sowohl in der Vorlaufbaugruppe BG1 als auch in der Rücklaufbaugruppe BG2 jeweils ein Volumenstromsensor angeordnet, dann wird eine redundante Messung des Volumenstroms m des Wärmeträgermediums durch den Heizkörper 3 hindurch ermöglicht.

Das Rechenwerk berechnet auf die oben beschriebene Weise aus der gemessenen oder bekannten Prozessgröße Volumenstrom m sowie aus den gemessenen Prozessgrößen Vorlauftemperatur Tv, Rücklauftemperatur $T_R$ und Raumtemperatur $T_L$ eine Oberflächentemperatur To des Heizkörpers 3 in einer vorgegebenen relativen Höhe h% am Heizkörper 3 und/oder eine logarithmische Übertemperatur $\Delta T_{ln}$ des Heizkörpers 3. Insbesondere berechnet das Rechenwerk eine aktuell dem Heizkörper 3 zugeführte Wärmeleistung. Aus den Daten von mindestens zwei Arbeitspunkten berechnet das Rechenwerk auf die oben beschriebene Weise einen Heizkörperexponenten n und eine Referenzleistung $Q_R$ des Heizkörpers 3. Insbesondere berechnet das Rechenwerk auf die oben beschriebene Weise mindestens einen mit einer durch den Heizkörper 3 abgegebenen Wärmemenge korrespondierenden Verbrauchswert Q1, Q2, Q3, insbesondere gemäß der Formel (1), (2) und/oder (4). Die jeweiligen Daten werden mittels der Kommunikationseinrichtungen vorteilhafterweise zwischen den Baugruppen BG1, BG2 und optional durch mindestens eine der Kommunikationseinrichtungen auch an ein Messgerätenetzwerk übertragen.

Figur 2 zeigt eine weitere Ausführungsform der Heizkostenverteilervorrichtung 1. In dieser Ausführungsform umfasst die Heizkostenverteilervorrichtung 1, zusätzlich zur an der Vorlaufleitung 2 des Heizkörpers 3 anordbare oder, wie hier dargestellt, bereits angeordnete Vorlaufbaugruppe BG1 und zur an der Rücklaufleitung 4 des Heizkörpers 3 anordbare oder, wie hier dargestellt, bereits angeordnete Rücklaufbaugruppe BG2, eine dritte Baugruppe BG3. Der Raumtemperatursensor ist bei dieser Ausführungsform zusammen mit einer weiteren Kommunikationseinrichtung in der dritten Baugruppe BG3, vom Heizkörper 3 entfernt, im selben Raum angeordnet. Optional können auch die Vorlaufbaugruppe BG1 und/oder die Rücklaufbaugruppe BG2 einen Raumtemperatursensor aufweisen. Das Rechenwerk kann bei dieser Ausführungsform in einer der drei Baugruppen BG1, BG2, BG3 angeordnet sein. Alternativ können zwei der Baugruppe BG1, BG2, BG3 oder alle drei Baugruppen BG1, BG2, BG3 ein solches Rechenwerk aufweisen.

Das Rechenwerk berechnet auf die oben beschriebene Weise aus der gemessenen oder bekannten Prozessgröße Volumenstrom m sowie aus den gemessenen Prozessgrößen Vorlauftemperatur Tv, Rücklauftemperatur $T_R$ und Raumtemperatur $T_L$ die Oberflächentemperatur To des Heizkörpers 3 in der vorgegebenen relativen Höhe h% am Heizkörper 3 und/oder die logarithmische Übertemperatur $\Delta T_{ln}$ des Heizkörpers 3. Insbesondere berechnet das Rechenwerk eine aktuell dem Heizkörper 3 zugeführte Wärmeleistung. Aus den Daten von mindestens zwei Arbeitspunkten berechnet das Rechenwerk auf die oben beschriebene Weise den Heizkörperexponenten n und die Referenzleistung $Q_R$ des Heizkörpers 3. Insbesondere berechnet das Rechenwerk auf die oben beschriebene Weise mindestens einen mit der durch den Heizkörper 3 abgegebenen Wärmemenge korrespondierenden Verbrauchswert Q1, Q2, Q3, insbesondere gemäß der Formel (1), (2) und/oder (4). Die jeweiligen Daten werden mittels der Kommunikationseinrichtungen vorteilhafterweise zwischen den Baugruppen BG1, BG2 und optional durch mindestens eine der Kommunikationseinrichtungen auch an ein Messgerätenetzwerk übertragen.

In Figur 3 ist eine weitere Ausführungsform der Heizkostenverteilervorrichtung 1 dargestellt. In dieser Ausführungsform umfasst die Heizkostenverteilervorrichtung 1, zusätzlich zur an der Vorlaufleitung 2 des Heizkörpers 3 anordbare oder, wie hier dargestellt, bereits angeordnete Vorlaufbaugruppe BG1 und zur an der Rücklaufleitung 4 des Heizkörpers 3 anordbare oder, wie hier dargestellt, bereits angeordnete Rücklaufbaugruppe BG2 sowie zur dritten Baugruppe BG3 eine vierte Baugruppe BG4. Der Raumtemperatursensor ist hier wieder zusammen mit der weiteren Kommunikationseinrichtung in der dritten Baugruppe BG3, vom Heizkörper 3 entfernt, im selben Raum angeordnet. Optional können auch die Vorlaufbaugruppe BG1 und/oder die Rücklaufbaugruppe BG2 einen Raumtemperatursensor aufweisen. In der vierten Baugruppe BG4 sind eine weitere Kommunikationseinrichtung und das Rechenwerk angeordnet. Alternativ können zwei oder drei der Baugruppen BG1, BG2, BG3, BG4 oder alle vier Baugruppen BG1, BG2, BG3, BG4 ein solches Rechenwerk aufweisen. Die vierte Baugruppe BG4 ist außerhalb des Raumes mit dem Heizkörper 3 angeordnet. Sie ist z. B. ein Teil eines zentralen Rechensystems, in dem der mindestens eine Verbrauchswert der Heizkostenverteilervorrichtung berechnet wird.

Das Rechenwerk berechnet auf die oben beschriebene Weise aus der gemessenen oder bekannten Prozessgröße Volumenstrom m sowie aus den gemessenen Prozessgrößen Vorlauftemperatur Tv, Rücklauftemperatur $T_R$ und Raumtemperatur $T_L$ die Oberflächentemperatur To des Heizkörpers 3 in der vorgegebenen relativen Höhe h% am Heizkörper 3 und/oder die logarithmische Übertemperatur $\Delta T_{ln}$ des Heizkörpers 3. Insbesondere berechnet das Rechenwerk eine aktuell dem Heizkörper 3 zugeführte Wärmeleistung. Aus den Daten von mindestens zwei Arbeitspunkten berechnet das Rechenwerk auf die oben beschriebene Weise den Heizkörperexponenten n und die Referenzleistung $Q_R$ des Heizkörpers 3. Insbesondere berechnet das Rechenwerk auf die oben beschriebene Weise mindestens einen mit der durch den Heizkörper 3 abgegebenen Wärmemenge korrespondierenden Verbrauchswert Q1, Q2, Q3, insbesondere gemäß der Formel (1), (2) und/oder (4). Die jeweiligen Daten werden mittels der Kommunikationseinrichtungen vorteilhafterweise zwischen den Baugruppen BG1, BG2 und optional durch mindestens eine der Kommunikationseinrichtungen auch an ein Messgerätenetzwerk übertragen.

**BEZUGSZEICHENLISTE**

1    Heizkostenverteilervorrichtung
2    Vorlaufleitung
3    Heizkörper
4    Rücklaufleitung

BG1    Vorlaufbaugruppe
BG2    Rücklaufbaugruppe
BG3    dritte Baugruppe
BG4    vierte Baugruppe

**Patentansprüche**

1. Verfahren zum Betrieb einer Heizkostenverteilervorrichtung (1), wobei als Parameter einer ersten Parametergruppe ein Volumenstrom (m), eine Vorlauftemperatur (Tv) und mittels eines Rücklauftemperatursensors eine Rücklauftemperatur ($T_R$) eines den Heizkörper (3) durchströmenden Wärmeträgermediums sowie eine Raumtemperatur ($T_L$) ermittelt werden und aus jeweils mindestens einem Parameter dieser ersten Parametergruppe

   - eine Oberflächentemperatur (To) des Heizkörpers (3) in einer vorgegebenen relativen Höhe (h%) am Heizkörper (3) gemäß der Formel

$$T_O = h\% \left(T_V - T_R\right) + T_R,$$

   - eine logarithmische Übertemperatur ($\Delta T_{ln}$) des Heizkörpers (3) gemäß der Formel

$$\Delta T_{ln} = \frac{T_V - T_R}{\ln\left(\frac{T_V - T_L}{T_R - T_L}\right)},$$

   - ein Heizkörperexponent (n) des Heizkörpers (3) gemäß der Formel

$$n = ln \frac{\frac{\Delta T_{ln,A1}}{\Delta T_{ln,A2}}}{\frac{Q_{A1}}{Q_{A2}}},$$

   - eine Referenzleistung ($Q_R$) des Heizkörpers (3)

$$Q_R = Q \left(\frac{\Delta T_{ln,R}}{\Delta T_{ln}}\right)^n,$$

   und
   - mindestens ein mit einer durch den Heizkörper (3) abgegebenen Wärmemenge korrespondierender Verbrauchswert (Q1, Q2, Q3) als Parameter einer zweiten Parametergruppe abgeleitet werden,
   wobei mindestens zwei Arbeitspunkte (A1, A2) mit, zumindest im Wesentlichen, konstantem Volumenstrom (m), konstanter Vorlauftemperatur (Tv), konstanter Rücklauftemperatur ($T_R$) und konstanter Raumtemperatur ($T_L$)

ermittelt werden, wobei für jeden der Arbeitspunkte aus der Vorlauftemperatur (Tv), der Rücklauftemperatur ($T_R$) und dem Volumenstrom (m) eine Momentanleistung ($Q_{A1}$, $Q_{A2}$) des Heizkörpers (3) ermittelt wird und aus der Vorlauftemperatur (Tv), der Rücklauftemperatur ($T_R$) und der Raumtemperatur ($T_L$) die logarithmische Übertemperatur ($\Delta T_{ln,A1}$, $\Delta T_{ln,A2}$) des Heizkörpers (3) ermittelt wird, und

wobei aus den logarithmischen Übertemperaturen ($\Delta T_{ln,A1}$, $AT_{ln,A2}$) und Momentanleistungen ($Q_{A1}$, $Q_{A2}$) der beiden Arbeitspunkte der Heizkörperexponent (n) ermittelt wird und aus der logarithmischen Übertemperatur ($\Delta T_{ln,A1}$, $AT_{ln,A2}$) und der Momentanleistung ($Q_{A1}$, $Q_{A2}$) mindestens eines der Arbeitspunkte und dem Heizkörperexponenten (n) die Referenzleistung ($Q_R$) des Heizkörpers (3) ermittelt wird, wobei in die Formel

$$Q_R = Q \left( \frac{\Delta T_{ln,R}}{\Delta T_{ln}} \right)^n$$

zur Ermittlung der Referenzleistung ($Q_R$) des Heizkörpers (3) für $\Delta T_{ln}$ die logarithmische Übertemperatur ($\Delta T_{ln,A1}$, $AT_{ln,A2}$) des jeweiligen Arbeitspunktes und für Q die Momentanleistung ($Q_{A1}$, $Q_{A2}$) des jeweiligen Arbeitspunktes eingesetzt wird.

2. Verfahren nach Anspruch 1,
wobei aus der Referenzleistung ($Q_R$) des Heizkörpers (3) ein $K_Q$-Wert ermittelt wird.

3. Verfahren nach einem der vorhergehenden Ansprüche,
wobei c-Werte eines Vorlauftemperatursensors, eines Rücklauftemperatursensors und mindestens eines Raumtemperatursensors für alle vorgesehenen Rohleitungsdurchmesser und Rohrleitungsmaterialien ermittelt werden.

4. Verfahren nach Anspruch 3,
wobei mittels der c-Werte der Temperatursensoren ein Kc-Wert ermittelt wird.

5. Verfahren nach einem der vorhergehenden Ansprüche,

wobei mittels einer spezifischen Wärmekapazität (c) eines den Heizkörper (3) durchströmenden Wärmeträgermediums, des Volumenstroms (m), der Vorlauftemperatur (Tv) und der Rücklauftemperatur ($T_R$) und/oder mittels eines aus dem $K_Q$-Wert und dem Kc-Wert ermittelten Korrekturfaktors (K), der Oberflächentemperatur (To) des Heizkörpers (3) in der vorgegebenen relativen Höhe (h%) am Heizkörper (3), der Raumtemperatur ($T_L$) und dem Heizkörperexponenten (n) und/oder mittels des aus dem $K_Q$-Wert und
dem Kc-Wert ermittelten Korrekturfaktors (K), der logarithmischen Übertemperatur ($\Delta T_{ln}$) des Heizkörpers (3) und dem Heizkörperexponenten (n) ein mit der durch den Heizkörper (3) abgegebenen Wärmemenge korrespondierender Verbrauchswert (Q1, Q2, Q3) ermittelt wird.

6. Heizkostenverteilervorrichtung (1), betrieben mittels eines Verfahrens nach einem der vorhergehenden Ansprüche, umfassend eine an einer Vorlaufleitung (2) eines Heizkörpers (3) anordbare oder angeordnete Vorlaufbaugruppe (BG1) mit einem Vorlauftemperatursensor, welcher ausgebildet und eingerichtet ist zur Ermittlung der Vorlauftemperatur (Tv), eine an einer Rücklaufleitung (4) des Heizkörpers (3) anordbare oder angeordnete Rücklaufbaugruppe (BG2) mit einem Rücklauftemperatursensor, welcher ausgebildet und eingerichtet ist zur Ermittlung der Rücklauftemperatur ($T_R$), mindestens einen Raumtemperatursensor, welcher ausgebildet und eingerichtet ist zur Ermittlung der Raumtemperatur ($T_L$), und mindestens ein Rechenwerk oder mehrere Rechenwerke, welches ausgebildet und eingerichtet ist oder welche zusammen eingerichtet und ausgebildet sind zur Ermittlung aller Parameter der zweiten Parametergruppe mittels jeweils mindestens eines Parameters der ersten Parametergruppe.

7. Heizkostenverteilervorrichtung (1) nach Anspruch 6,

- wobei die Vorlaufbaugruppe (BG1) eine Kommunikationseinrichtung umfasst, welche insbesondere ausgebildet und eingerichtet ist zur Kommunikation mit der Rücklaufbaugruppe (BG2) und/oder einer dritten Baugruppe (BG3) und/oder einer vierten Baugruppe (BG4), und/oder
- wobei die Rücklaufbaugruppe (BG2) eine Kommunikationseinrichtung umfasst, welche insbesondere ausgebildet und eingerichtet ist zur Kommunikation mit der Vorlaufbaugruppe (BG1) und/oder der dritten Baugruppe (BG3) und/oder der vierten Baugruppe (BG4).

8. Heizkostenverteilervorrichtung (1) nach Anspruch 6 oder 7,

wobei mindestens ein Volumenstromsensor vorgesehen ist, der in der Vorlaufbaugruppe (BG1) oder Rücklaufbaugruppe (BG2) angeordnet ist und ausgebildet und eingerichtet ist zur Ermittlung, insbesondere Messung, des Volumenstroms (m).

9. Heizkostenverteilervorrichtung (1) nach einem der Ansprüche 6 bis 8,
wobei die Vorlaufbaugruppe (BG1) als ein Heizkörperventil mit Thermostatkopf ausgebildet ist, das mit konstantem Volumenstrom oder zur Durchführung eines Proportionalbetriebs ausgebildet ist, in welchem eine direkte Proportionalität zwischen einem Ventilhub des Heizkörperventils und einem Volumenstrom (m) durch das Heizkörperventil hindurch besteht, oder ein solches Heizkörperventil mit Thermostatkopf umfasst.

10. Heizkostenverteilervorrichtung (1) nach einem der Ansprüche 6 bis 9,
umfassend eine vom Heizkörper (3) beabstandete dritte Baugruppe (BG3), insbesondere mit einer weiteren Kommunikationseinrichtung, die insbesondere ausgebildet und eingerichtet ist zur Kommunikation mit der Vorlaufbaugruppe (BG1) und/oder der Rücklaufbaugruppe (BG2) und/oder einer vierten Baugruppe (BG4), wobei die dritte Baugruppe (BG3) im selben Raum eines Gebäudes mit dem Heizkörper (3) anordbar oder angeordnet ist.

11. Heizkostenverteilervorrichtung (1) nach einem der Ansprüche 6 bis 10,
umfassend eine vom Heizkörper (3) beabstandete vierte Baugruppe (BG4), insbesondere mit einer weiteren Kommunikationseinrichtung, die insbesondere ausgebildet und eingerichtet ist zur Kommunikation mit der Vorlaufbaugruppe (BG1) und/oder der Rücklaufbaugruppe (BG2) und/oder einer dritten Baugruppe (BG3), wobei die vierte Baugruppe (BG4) außerhalb des Raums anordbar oder angeordnet ist, in welchem der Heizkörper (3) angeordnet ist.

12. Heizkostenverteilervorrichtung (1) nach einem der Ansprüche 6 bis 11,
wobei der mindestens eine Raumtemperatursensor oder mindestens ein weiterer Raumtemperatursensor, welcher ausgebildet und eingerichtet ist zur Ermittlung der Raumtemperatur ($T_L$), in der Vorlaufbaugruppe (BG1), in der Rücklaufbaugruppe (BG2) oder in der dritten Baugruppe (BG3) angeordnet ist.

13. Heizkostenverteilervorrichtung (1) nach einem der Ansprüche 6 bis 12,
wobei das Rechenwerk oder mindestens ein weiteres Rechenwerk, welches ausgebildet und eingerichtet ist zur Ermittlung mindestens eines Parameters der zweiten Parametergruppe mittels mindestens eines Parameters der ersten Parametergruppe, in der Vorlaufbaugruppe (BG1), in der Rücklaufbaugruppe (BG2), in der dritten Baugruppe (BG3) oder in der vierten Baugruppe (BG4) angeordnet ist.

**Claims**

1. Method for operating a heat cost allocator (1), wherein a volumetric flow rate (m), a feed temperature (Tv) and, by means of a return temperature sensor, a return temperature ($T_R$) of a heat transfer medium flowing through the radiator (3) and a room temperature ($T_L$) are determined as parameters of a first parameter group and from in each case at least one parameter of this first parameter group

- a surface temperature (To) of the radiator (3) at a predefined relative height (h%) on the radiator (3) according to the formula

$$T_O = h\% \, (T_V - T_R) + T_R,$$

- a logarithmic overtemperature ($\Delta T_{ln}$) of the radiator (3) according to the formula

$$\Delta T_{ln} = \frac{T_V - T_R}{\ln(\frac{T_V - T_L}{T_R - T_L})},$$

- a radiator exponent (n) of the radiator (3) according to the formula

$$n = ln\,\frac{\frac{\Delta T_{ln,A1}}{\Delta T_{ln,A2}}}{\frac{Q_{A1}}{Q_{A2}}},$$

- a reference power ($Q_R$) of the radiator (3)

$$Q_R = Q\,\left(\frac{\Delta T_{ln,R}}{\Delta T_{ln}}\right)^{\bar{n}},$$

and
- at least one consumption value (Q1, Q2, Q3) corresponding to a quantity of heat output by the radiator (3) are derived as parameters of a second parameter group, wherein at least two operating points (A1, A2) with, at least substantially, constant volumetric flow rate (m), constant feed temperature (Tv), constant return temperature ($T_R$) and constant room temperature ($T_L$) are determined, wherein for each of the operating points an instantaneous power ($Q_{A1}$, $Q_{A2}$) of the radiator (3) is determined from the feed temperature (Tv), the return temperature ($T_R$) and the volumetric flow rate (m) and the logarithmic overtemperature ($\Delta T_{ln,A1}$, $\Delta T_{ln,A2}$) of the radiator (3) is determined from the feed temperature (Tv), the return temperature ($T_R$) and the room temperature ($T_L$), and wherein the radiator exponent (n) is determined from the logarithmic overtemperatures ($\Delta T_{ln,A1}$, $\Delta T_{ln,A2}$) and instantaneous powers ($Q_{A1}$, $Q_{A2}$) of the two operating points and the reference power ($Q_R$) of the radiator (3) is determined from the logarithmic overtemperature ($\Delta T_{ln,A1}$, $\Delta T_{ln,A2}$) and the instantaneous power ($Q_{A1}$, $Q_{A2}$) of at least one of the operating points and the radiator exponent (n), wherein the following are inserted into the formula

$$Q_R = Q\,\left(\frac{\Delta T_{ln,R}}{\Delta T_{ln}}\right)^{n}$$

for determining the reference power ($Q_R$) of the radiator (3): for $\Delta T_{ln}$ the logarithmic overtemperature ($\Delta T_{ln,A1}$, $\Delta T_{ln,A2}$) of the respective operating point and for Q the instantaneous power ($Q_{A1}$, $Q_{A2}$) of the respective operating point.

2. Method according to Claim 1,
   wherein a $K_Q$-value is determined from the reference power ($Q_R$) of the radiator (3).

3. Method according to either of the preceding claims,
   wherein c-values of a feed temperature sensor, a return temperature sensor and at least one room temperature sensor are determined for all envisaged pipeline diameters and pipeline materials.

4. Method according to Claim 3,
   wherein a Kc-value is determined by means of the c-values of the temperature sensors.

5. Method according to any of the preceding claims,
   wherein by means of a specific heat capacity (c) of a heat transfer medium flowing through the radiator (3), the volumetric flow rate (m), the feed temperature (Tv) and the return temperature ($T_R$) and/or by means of a correction factor (K) determined from the $K_Q$-value and the Kc-value, the surface temperature (To) of the radiator (3) at the predefined relative height (h%) on the radiator (3), the room temperature ($T_L$) and the radiator exponent (n) and/or by means of the correction factor (K) determined from the $K_Q$-value and the Kc-value, the logarithmic overtemperature ($\Delta T_{ln}$) of the radiator (3) and the radiator exponent (n), a consumption value (Q1, Q2, Q3) corresponding to the quantity of heat output by the radiator (3) is determined.

6. Heat cost allocator (1), operated by means of a method according to any of the preceding claims,
   comprising a feed assembly (BG1) arrangeable or arranged on a feed line (2) of a radiator (3) and having a feed temperature sensor designed and configured for determining the feed temperature (Tv), a return assembly (BG2) arrangeable or arranged on a return line (4) of the radiator (3) and having a return temperature sensor designed and configured for determining the return temperature ($T_R$), at least one room temperature sensor designed and configured for determining the room temperature ($T_L$), and at least one arithmetic unit or a plurality of arithmetic units, which is designed and configured or which are jointly configured and designed for determining all parameters of the second parameter group by means of in each case at least one parameter of the first parameter group.

7. Heat cost allocator (1) according to Claim 6,

  - wherein the feed assembly (BG1) comprises a communication device, which is in particular designed and configured for communication with the return assembly (BG2) and/or a third assembly (BG3) and/or a fourth assembly (BG4), and/or
  - wherein the return assembly (BG2) comprises a communication device, which is in particular designed and configured for communication with the feed assembly (BG1) and/or the third assembly (BG3) and/or the fourth assembly (BG4).

8. Heat cost allocator (1) according to Claim 6 or 7,
  wherein at least one volumetric flow rate sensor is provided, which is arranged in the feed assembly (BG1) or return assembly (BG2) and is designed and configured for determining, in particular measuring, the volumetric flow rate (m).

9. Heat cost allocator (1) according to any of Claims 6 to 8,
  wherein the feed assembly (BG1) is designed as a radiator valve with a thermostat head, said radiator valve being designed with a constant volumetric flow rate or for carrying out a proportional operation mode in which there is a direct proportionality between a valve stroke of the radiator valve and a volumetric flow rate (m) through the radiator valve, or comprises such a radiator valve with a thermostat head.

10. Heat cost allocator (1) according to any of Claims 6 to 9,
  comprising a third assembly (BG3) spaced apart from the radiator (3), and in particular having a further communication device, which is in particular designed and configured for communication with the feed assembly (BG1) and/or the return assembly (BG2) and/or a fourth assembly (BG4), wherein the third assembly (BG3) is arrangeable or arranged in the same room of a building with the radiator (3).

11. Heat cost allocator (1) according to any of Claims 6 to 10,
  comprising a fourth assembly (BG4) spaced apart from the radiator (3), and in particular having a further communication device, which is in particular designed and configured for communication with the feed assembly (BG1) and/or the return assembly (BG2) and/or a third assembly (BG3), wherein the fourth assembly (BG4) is arrangeable or arranged outside the room in which the radiator (3) is arranged.

12. Heat cost allocator (1) according to any of Claims 6 to 11,
  wherein the at least one room temperature sensor or at least one further room temperature sensor, which is designed and configured for determining the room temperature ($T_L$), is arranged in the feed assembly (BG1), in the return assembly (BG2) or in the third assembly (BG3).

13. Heat cost allocator (1) according to any of Claims 6 to 12,
  wherein the arithmetic unit or at least one further arithmetic unit, which is designed and configured for determining at least one parameter of the second parameter group by means of at least one parameter of the first parameter group, is arranged in the feed assembly (BG1), in the return assembly (BG2), in the third assembly (BG3) or in the fourth assembly (BG4).

**Revendications**

1. Procédé de fonctionnement d'un dispositif de répartition des frais de chauffage (1), dans lequel, en tant que paramètres d'un premier groupe de paramètres, un débit volumique (m), une température de départ (Tv) et, au moyen d'un capteur de température de retour, une température de retour ($T_R$) d'un fluide caloporteur circulant à travers un radiateur (3) et une température ambiante ($T_L$) sont déterminés, et respectivement à partir d'au moins un paramètre de ce premier groupe de paramètres

  - une température de surface (To) du radiateur (3) à une hauteur relative prédéterminée (h%) sur le radiateur (3) selon la formule

$$T_O = h\% \, (T_V - T_R) + T_R,$$

- une surtempérature logarithmique ($\Delta T_{ln}$) du radiateur (3) selon la formule

$$\Delta T_{ln} = \frac{T_V - T_R}{\ln\left(\frac{T_V - T_L}{T_R - T_L}\right)},$$

- un exposant de radiateur (n) du radiateur (3) selon la formule

$$n = \ln \frac{\frac{\Delta T_{ln,A1}}{\Delta T_{ln,A2}}}{\frac{Q_{A1}}{Q_{A2}}},$$

- une puissance de référence ($Q_R$) du radiateur (3)

$$Q_R = Q\left(\frac{\Delta T_{ln,R}}{\Delta T_{ln}}\right)^n,$$

et

- au moins une valeur de consommation (Q1, Q2, Q3) correspondant à une quantité de chaleur émise par le radiateur (3) sont dérivés en tant que paramètres d'un deuxième groupe de paramètres, dans lequel au moins deux points de travail (A1, A2) sont déterminés avec un débit volumique (m), une température de départ (Tv), une température de retour ($T_R$) et une température ambiante ($T_L$) au moins sensiblement constants, dans lequel, pour chacun des points de travail, une puissance instantanée ($Q_{A1}$, $Q_{A2}$) du radiateur (3) est déterminée à partir de la température de départ (Tv), de la température de retour ($T_R$) et du débit volumique (m), et la surtempérature logarithmique ($\Delta T_{ln,A1}$, $\Delta T_{ln,A2}$) du radiateur (3) est déterminée à partir de la température de départ (Tv), de la température de retour ($T_R$) et de la température ambiante ($T_L$), et dans lequel l'exposant de radiateur (n) est déterminé à partir des surtempératures logarithmiques ($\Delta T_{ln,A1}$, $\Delta T_{ln,A2}$) et des puissances instantanées ($Q_{A1}$, $Q_{A2}$) des deux points de travail, et la puissance de référence ($Q_R$) du radiateur (3) est déterminée à partir de la surtempérature logarithmique ($\Delta T_{ln,A1}$, $\Delta T_{ln,A2}$) et de la puissance instantanée ($Q_{A1}$, $Q_{A2}$) d'au moins l'un des points de travail et de l'exposant de radiateur (n), dans lequel, dans la formule

$$Q_R = Q\left(\frac{\Delta T_{ln,R}}{\Delta T_{ln}}\right)^n$$

destinée à déterminer la puissance de référence ($Q_R$) du radiateur (3), on utilise pour $\Delta T_{ln}$, la surtempérature logarithmique ($\Delta T_{ln,A1}$, $\Delta T_{ln,A2}$) du point de travail correspondant et pour Q, la puissance instantanée ($Q_{A1}$, $Q_{A2}$) du point de travail respectif.

2. Procédé selon la revendication 1,
dans lequel une valeur $K_Q$ est déterminée à partir de la puissance de référence ($Q_R$) du radiateur (3).

3. Procédé selon l'une des revendications précédentes,
dans lequel les valeurs c d'un capteur de température de départ, d'un capteur de température de retour et d'au moins un capteur de température ambiante sont déterminées pour tous les diamètres de tuyauterie et tous les matériaux de tuyauterie prévus.

4. Procédé selon la revendication 3,
dans lequel une valeur Kc est déterminée au moyen des valeurs c des capteurs de température.

5. Procédé selon l'une des revendications précédentes,
dans lequel une valeur de consommation (Q1, Q2, Q3) correspondant à la quantité de chaleur émise par le radiateur (3) est déterminée au moyen d'une capacité thermique spécifique (c) d'un fluide caloporteur circulant à travers le radiateur (3), du débit volumique (m), de la température de départ (Tv) et de la température de retour ($T_R$), et/ou au moyen d'un facteur de correction (K) déterminé à partir de la valeur $K_Q$ et de la valeur Kc, de la température de surface (To) du radiateur (3) à la hauteur relative prédéfinie (h%) sur le radiateur (3), de la température ambiante ($T_L$) et de l'exposant de radiateur (n), et/ou au moyen du facteur de correction (K) déterminé à partir de la valeur $K_Q$ et de la valeur Kc, de la surtempérature logarithmique ($\Delta T_{ln}$) du radiateur (3) et de l'exposant de radiateur (n).

6.  Dispositif de répartition des frais de chauffage (1), fonctionnant au moyen d'un procédé selon l'une des revendications précédentes,
    comprenant un ensemble de départ (BG1) qui peut être disposé ou est disposé sur une conduite de départ (2) d'un radiateur (3), dotée d'un capteur de température de départ, lequel est conçu et configuré pour déterminer la température de départ (Tv), un ensemble de retour (BG2) qui peut être disposé ou est disposé sur une conduite de retour (4) du radiateur (3), dotée d'un capteur de température de retour, lequel est conçu et configuré pour déterminer la température de retour ($T_R$), au moins un capteur de température ambiante, lequel est conçu et configuré pour déterminer la température ambiante ($T_L$), et au moins un calculateur ou plusieurs calculateurs, lequel est conçu et configuré ou lesquels sont ensemble configurés et conçus pour déterminer tous les paramètres du deuxième groupe de paramètres au moyen respectivement d'au moins un paramètre du premier groupe de paramètres.

7.  Dispositif de répartition des frais de chauffage (1) selon la revendication 6,

    - dans lequel l'ensemble de départ (BG1) comprend un dispositif de communication, lequel est en particulier conçu et configuré pour communiquer avec l'ensemble de retour (BG2) et/ou un troisième ensemble (BG3) et/ou un quatrième ensemble (BG4), et/ou
    - dans lequel l'ensemble de retour (BG2) comprend un dispositif de communication, lequel est en particulier conçu et configuré pour communiquer avec l'ensemble de départ (BG1) et/ou le troisième ensemble (BG3) et/ou le quatrième ensemble (BG4).

8.  Dispositif de répartition des frais de chauffage (1) selon la revendication 6 ou 7,
    dans lequel il est prévu au moins un capteur de débit volumique, lequel est placé dans l'ensemble de départ (BG1) ou l'ensemble de retour (BG2) et est conçu et configuré pour la détermination, en particulier la mesure, du débit volumique (m).

9.  Dispositif de répartition des frais de chauffage (1) selon l'une des revendications 6 à 8,
    dans lequel l'ensemble de départ (BG1) est conçu sous la forme d'un robinet de radiateur à tête thermostatique, lequel est conçu avec un débit volumique constant ou pour l'exécution d'un mode de fonctionnement proportionnel, dans lequel il existe une proportionnalité directe entre une course de soupape du robinet de radiateur et un débit volumique (m) à travers le robinet de radiateur, ou comprend un tel robinet de radiateur à tête thermostatique.

10. Dispositif de répartition des frais de chauffage (1) selon l'une des revendications 6 à 9,
    comprenant un troisième ensemble (BG3) espacé du radiateur (3), en particulier avec un autre dispositif de communication, lequel est en particulier conçu et configuré pour communiquer avec l'ensemble de départ (BG1) et/ou l'ensemble de retour (BG2) et/ou un quatrième ensemble (BG4), le troisième ensemble (BG3) pouvant être disposé ou étant disposé dans la même pièce d'un bâtiment que le radiateur (3).

11. Dispositif de répartition des frais de chauffage (1) selon l'une des revendications 6 à 10,
    comprenant un quatrième ensemble (BG4) espacé du radiateur (3), en particulier avec un autre dispositif de communication, lequel est en particulier conçu et configuré pour communiquer avec l'ensemble de départ (BG1) et/ou l'ensemble de retour (BG2) et/ou un troisième ensemble (BG3), le quatrième ensemble (BG4) pouvant être disposé ou étant disposé à l'extérieur de la pièce dans laquelle le radiateur (3) est disposé.

12. Dispositif de répartition des frais de chauffage (1) selon l'une des revendications 6 à 11,
    dans lequel ledit au moins un capteur de température ambiante ou au moins un autre capteur de température ambiante, lequel est conçu et configuré pour déterminer la température ambiante ($T_L$), est disposé dans l'ensemble de départ (BG1), dans l'ensemble de retour (BG2) ou dans le troisième ensemble (BG3).

13. Dispositif de répartition des frais de chauffage (1) selon l'une des revendications 6 à 12,
    dans lequel le calculateur ou au moins un autre calculateur, lequel est conçu et configuré pour déterminer au moins un paramètre du deuxième groupe de paramètres au moyen d'au moins un paramètre du premier groupe de paramètres, est disposé dans l'ensemble de départ (BG1), dans l'ensemble de retour (BG2), dans le troisième ensemble (BG3) ou dans le quatrième ensemble (BG4).

FIG 1

BG3

1

BG1

2

3

BG2

4

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016104225 A1
- DE 102018103144 A1

- EP 1592948 B1